(19) Europäisches Patentamt
European Patent Office
Office européen des brevets

(11) **EP 4 726 742 A1**

(12) **EUROPEAN PATENT APPLICATION**
published in accordance with Art. 153(4) EPC

(43) Date of publication:
**15.04.2026  Bulletin 2026/16**

(21) Application number: 24819249.4

(22) Date of filing: **30.05.2024**

(51) International Patent Classification (IPC):
*H01B 1/10* *(2006.01)*          *C03C 10/16* *(2006.01)*
*H01B 1/06* *(2006.01)*          *H01B 1/08* *(2006.01)*
*H01M 10/0562* *(2010.01)*

(52) Cooperative Patent Classification (CPC):
Y02E 60/10

(86) International application number:
**PCT/JP2024/019908**

(87) International publication number:
**WO 2024/253019 (12.12.2024 Gazette 2024/50)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **09.06.2023   JP 2023095791**

(71) Applicant: **Idemitsu Kosan Co.,Ltd.
Tokyo 100-8321 (JP)**

(72) Inventors:
• **TERAI, Kota
  Tokyo 100-8321 (JP)**
• **KADOTA, Shogo
  Tokyo 100-8321 (JP)**

(74) Representative: **Vossius & Partner
Patentanwälte Rechtsanwälte mbB
Siebertstraße 3
81675 München (DE)**

(54) **CRYSTALLINE SULFIDE SOLID ELECTROLYTE**

(57)    Provided is a crystalline sulfide solid electrolyte having a high ionic conductivity and being capable of realizing a reduction in raw material cost, which contains a lithium atom, a phosphorus atom, a sulfur atom, an oxygen atom, and a halogen atom, has diffraction peaks at $2\theta = 20.3 \pm 0.5°$ and $29.6 \pm 0.6°$ in X-ray diffraction measurement using a CuKα line, has a peak attributable to $PSO_3^{3-}$ observed at $39.6 \pm 5.0$ ppm in solid-state $^{31}P$-NMR measurement, and has a composition represented by the following composition formula: $(100 - y)(0.5)(Li_{3+2z}P(S_{1-x}O_x)_{4+z}) + (y)LiX$ (in which, x, y, and z satisfy $0.00060 \leq x \leq 0.15$, $3.0 \leq y < 25.0$, and $-0.17 \leq z \leq 1.5$, respectively, and X represents a halogen atom).

EP 4 726 742 A1

**Description**

Technical Field

The present invention relates to a crystalline sulfide solid electrolyte.

Background Art

With the rapid spread of information-related devices and communication devices, such as personal computers, video cameras, and mobile phones, in recent years, the development of batteries used as a power source therefor is gaining importance. Among them, lithium ion batteries have attracted attention from the viewpoint of high energy density.
Conventionally, since an electrolytic solution containing a flammable organic solvent has been used in a battery used for such an application, it is necessary to install a safety device for suppressing a temperature rise at the time of short circuit, and to improve a structure and material for preventing short circuit. In contrast, by replacing the electrolytic solution with a solid electrolyte to make the battery all-solid, a battery in which the electrolytic solution is replaced with a solid electrolyte layer has been developed because a flammable organic solvent is not used in the battery, simplification of safety devices is achieved, and the production cost and productivity are excellent.
Various kinds of solid electrolytes have been developed for use in the solid electrolyte layer, and, for example, PTL 1 discloses a solid electrolyte which contains lithium (Li) element, phosphorus (P) element, sulfur (S) element, oxygen (O) element, and halogen element and has a molar ratio of sulfur element/oxygen element of 0.2 to 100. PTL 2 discloses a solid electrolyte glass represented by $L_aM_bP_cS_dX_eO_f$(1') (L represents an alkaline metal, M represents one or more halogen elements selected from B, Al, Si, Ge, and the like, X represents one or more halogen elements selected from I, Cl, Br, and F, and X includes at least Br) and a method for producing the same. PTL 3 discloses a sulfide solid electrolyte material which contains an ion conductor having an ortho composition and LiI, in which the ion conductor contains oxygen.

Citation List

Patent Literature

PTL 1:JP 2014-93263 A
PTL 2:JP 2014-93261 A
PTL 3:JP 2014-89986 A

Summary of Invention

Technical Problem

The present invention has been made in view of such actual circumstances, and an object thereof is to provide a sulfide solid electrolyte which has a high ionic conductivity and also realizes a reduction in raw material cost.

Solution to Problem

The crystalline sulfide solid electrolyte according to the present invention is a crystalline sulfide solid electrolyte containing a lithium atom, a phosphorus atom, a sulfur atom, an oxygen atom, and a halogen atom,

in which the crystalline sulfide solid electrolyte has diffraction peaks at $2\theta = 20.3 \pm 0.5°$ and $29.6 \pm 0.6°$ in X-ray diffraction measurement using a CuKα line,
has a peak attributable to $PSO_3^{3-}$ observed at $39.6 \pm 5.0$ ppm in solid-state $^{31}$P-NMR measurement, and
has a composition represented by the following composition formula (1):

$$(100-y)(0.5)(Li_{3+2z}P(S_{1-x}O_x)_{4+z}) + (y)LiX \quad (1)$$

in which, x, y, and z satisfy $0.00060 \le x \le 0.15$, $3.0 \le y < 25.0$, and $-0.17 \le z \le 1.5$, respectively, and X represents a halogen atom.

In addition, the crystalline sulfide solid electrolyte according to the present invention is a crystalline sulfide solid electrolyte containing a lithium atom, a phosphorus atom, a sulfur atom, an oxygen atom, and a halogen atom,

in which the crystalline sulfide solid electrolyte has diffraction peaks at $2\theta = 20.3 \pm 0.5°$ and $29.6 \pm 0.6°$ in X-ray diffraction measurement using a CuK$\alpha$ line, and
has a peak attributable to $PSO_3^{3-}$ observed at $39.6 \pm 5.0$ ppm in solid-state $^{31}$P-NMR measurement.

Advantageous Effects of Invention

According to the present invention, it is possible to provide a sulfide solid electrolyte having a high ionic conductivity and also realizing a reduction in raw material cost.

Brief Description of Drawings

[Fig. 1] Fig. 1 shows X-ray diffraction patterns of the crystalline sulfide solid electrolytes obtained in Examples.
[Fig. 2] Fig. 2 shows X-ray diffraction patterns of the crystalline sulfide solid electrolytes obtained in Examples.
[Fig. 3] Fig. 3 shows X-ray diffraction patterns of the crystalline sulfide solid electrolytes obtained in Examples.
[Fig. 4] Fig. 4 shows X-ray diffraction patterns of the crystalline sulfide solid electrolytes obtained in Examples.
[Fig. 5] Fig. 5 shows X-ray diffraction patterns of the crystalline sulfide solid electrolytes obtained in Examples.
[Fig. 6] Fig. 6 shows X-ray diffraction patterns of the crystalline sulfide solid electrolytes obtained in Comparative Examples.
[Fig. 7] Fig. 7 shows X-ray diffraction patterns of the crystalline sulfide solid electrolytes obtained in Comparative Examples.
[Fig. 8] Fig. 8 is solid-state $^{31}$P-NMR spectra of the crystalline sulfide solid electrolytes obtained in Examples.
[Fig. 9] Fig. 9 is solid-state $^{31}$P-NMR spectra of the crystalline sulfide solid electrolytes obtained in Examples.

Description of Embodiments

Hereinafter, an embodiment of the present invention (hereinafter, sometimes referred to as "the present embodiment") will be described. In addition, in the description herein, the numerical values of the upper limit and the lower limit relating to the numerical range of "or more", "or less", and "to" are numerical values that can be arbitrarily combined, and the numerical values of the examples can also be used as the numerical values of the upper limit and the lower limit.

(Findings Obtained by the Present Inventors to Reach the Present Invention)

As a result of intensive studies to solve the aforementioned problems, the present inventors have found the following matters, and have completed the present invention.
Until now, the development of solid electrolytes has been carried out mainly with attention paid to the improvement of the performances of solid electrolytes such as ionic conductivity and hydrolysis resistance, as disclosed in the aforementioned PTLs 1 to 3. However, in the development of all-solid batteries for practical use in recent years, attention has been paid not only to the improvement of these various performances but also to the reduction in raw material cost.
The solid electrolyte disclosed in PTL 1 contains a lithium (Li) element, a phosphorus (P) element, a sulfur (S) element, an oxygen (O) element, and a halogen element, and is intended to improve the hydrolysis resistance by containing the oxygen element, that is, to improve the ionic conductivity by containing the halogen element while suppressing the generation of hydrogen sulfide. However, the ionic conductivity is 0.21 to 2.2 mS/cm, and it cannot be said that the ionic conductivity is high for the amount of the raw material containing the halogen element used. Since the raw material containing the halogen element is expensive among the raw materials of the solid electrolyte, the solid electrolyte disclosed in PTL 1 has room for improvement in terms of reduction in raw material cost. Further, it cannot be said that the ionic conductivity is high in spite of the amount of the halogen element used, and there is room for improvement in terms of improving the ionic conductivity. In addition, the solid electrolyte disclosed in PTL 1 does not have the diffraction peak that the crystalline sulfide solid electrolyte of the present embodiment has.
The solid electrolyte glass disclosed in PTL 2 is a solid electrolyte glass containing a metal element such as B, Al, and Si in addition to an alkali metal such as lithium, a phosphorus element, a sulfur element, a halogen element, and an oxygen element represented by the aforementioned composition formula (1'). PTL 2 also describes a glass ceramic obtained by heat-treating the solid electrolytic glass, but the ionic conductivity thereof is 0.80 to 2.2 mS/cm, and it cannot be said that the ionic conductivity is high for the amount of the raw material containing a halogen element used. Therefore, there is room for improvement in terms of the reduction in raw material cost and the improvement in the ionic conductivity, as in the case of the solid electrolyte disclosed in PTL 1. In addition, the solid electrolyte disclosed in PTL 2 does not have the diffraction peak that the crystalline sulfide solid electrolyte of the present embodiment has.

The sulfide solid electrolyte material disclosed in PTL 3 contains LiI and oxygen, and by containing LiI, the ionic conductivity is improved, and at the same time, a decrease in chemical stability occurs, but a decrease in chemical stability is suppressed due to oxygen. Paragraph [0010] of PTL 3 discloses that since the non-crystallinity is high enough to have a glass transition point, the Li ion conductivity can be increased, and in Examples, it is an amorphous body in which a halo pattern is expressed by X-ray diffraction (XRD) measurement, so it is disclosed that it is different from the crystalline sulfide solid electrolyte. In addition, according to Examples of PTL 3, the ionic conductivity is 0.6 to 1.2 mS/cm, and it cannot be said that the ionic conductivity is high for the amount of the raw material containing a halogen element used. Therefore, there is room for improvement in terms of the reduction in raw material cost and the improvement in the ionic conductivity, as in the case of the solid electrolyte disclosed in PTL 1.

As described above, in PTLs 1 to 3, attention is paid to the improvement of the ionic conductivity and the hydrolysis resistance, but it cannot be said that the ionic conductivity is high for the amount of the raw material containing a halogen element used in any of PTLs 1 to 3. In addition, in these PTLs 1 to 3, it is intended to improve the ionic conductivity by using a halogen element, but such a method is known as a technical common sense without mentioning these Patent Literatures. In consideration of these, in PTLs 1 to 3, there is no motivation to reduce the amount of a halogen element used in order to improve the ionic conductivity. Further, these Patent Literatures do not disclose at all the idea of adding oxygen atoms to a sulfide solid electrolyte to obtain a high ionic conductivity and further to reduce the raw material cost. As described above, it cannot be said that a sulfide solid electrolyte having a high ionic conductivity and also realizing a reduction in raw material cost has been obtained by the related art such as PTLs 1 to 3.

Heretofore, it has been considered that the composition for obtaining a crystal structure expressing a high ionic conductivity, such as a thio-LISICON Region II type crystal structure or an LGPS type crystal structure, which is obtained in Examples to be described later, is limited to a very small part. In addition, as shown in Comparative Examples to be described later, when an oxygen atom is not contained and the amount of a halogen atom used is simply reduced, these crystal structures are not expressed, and the ionic conductivity also decreases.

The present inventors have paid attention to replacing a part of sulfur atoms with oxygen atoms in a sulfide solid electrolyte. As a result of further development, it has been found that a sulfide solid electrolyte containing a lithium atom, a phosphorus atom, a sulfur atom, an oxygen atom, and a halogen atom and having a predetermined diffraction peak has a high ionic conductivity and realizes a reduction in raw material cost, more specifically, has a high ionic conductivity while achieving a reduction in raw material cost, and can further improve the ionic conductivity in the case of using a large amount of an expensive raw material such as lithium halide.

The aforementioned PTLs 1 to 3 do not pay any attention to having a high ionic conductivity and reducing the raw material cost by having a predetermined diffraction peak in addition to replacing a part of the sulfur atoms with oxygen atoms, and do not pay any attention to reducing the raw material cost by containing oxygen atoms as a substitute for sulfur atoms.

As described above, it is a surprising phenomenon that has not been recognized at all that a high ionic conductivity can be obtained while reducing the raw material cost by containing a lithium atom, a phosphorus atom, a sulfur atom, an oxygen atom, and a halogen atom and having a predetermined diffraction peak.

In the description herein, the "solid electrolyte" means an electrolyte that maintains a solid state at 25°C under a nitrogen atmosphere. The "sulfide solid electrolyte" of the present embodiment is a solid electrolyte containing an oxygen atom in addition to a lithium atom, a sulfur atom, a phosphorus atom, and a halogen atom, and having an ionic conductivity attributable to the lithium atom.

The "sulfide solid electrolyte" includes both a crystalline sulfide solid electrolyte having a crystal structure and an amorphous sulfide solid electrolyte. In the description herein, the crystalline sulfide solid electrolyte is a solid electrolyte in which a peak derived from the solid electrolyte is observed in an X-ray diffraction pattern in a powder X-ray diffraction (XRD) measurement, and is a material in which the presence or absence of a peak derived from a raw material of the solid electrolyte is not considered. That is, the crystalline sulfide solid electrolyte includes a crystal structure derived from the solid electrolyte, and a part thereof may be a crystal structure derived from the solid electrolyte, or the whole thereof may be a crystal structure derived from the solid electrolyte. As long as the crystalline sulfide solid electrolyte has the X-ray diffraction pattern as described above, a part of the crystalline sulfide solid electrolyte may include an amorphous sulfide solid electrolyte (also referred to as a "glass component"). Therefore, the crystalline sulfide solid electrolyte includes a so-called glass ceramic obtained by heating an amorphous solid electrolyte (glass component) to a crystallization temperature or higher.

In addition, in the description herein, the amorphous sulfide solid electrolyte (glass component) means a material in which an X-ray diffraction pattern is a halo pattern in which a peak other than a peak substantially derived from a material is not observed in a powder X-ray diffraction (XRD) measurement, and means that the presence or absence of a peak derived from a raw material of the solid electrolyte does not matter.

(Embodiments of Present Embodiment)

The crystalline sulfide solid electrolyte according to a first embodiment of the present embodiment is a crystalline sulfide solid electrolyte containing a lithium atom, a phosphorus atom, a sulfur atom, an oxygen atom, and a halogen atom,

in which the crystalline sulfide solid electrolyte has diffraction peaks at $2\theta = 20.3 \pm 0.5°$ and $29.6 \pm 0.6°$ in X-ray diffraction measurement using a CuK$\alpha$ line,
has a peak attributable to $PSO_3^{3-}$ observed at $39.6 \pm 5.0$ ppm in solid-state $^{31}$P-NMR measurement, and
has a composition represented by the following composition formula (1):

$$(100 - y)(0.5)(Li_{3+2z}P(S_{1-x}O_x)_{4+z}) + (y)LiX \quad (1)$$

in which, x, y, and z satisfy $0.00060 \le x \le 0.15$, $3.0 \le y < 25.0$, and $-0.17 \le z \le 1.5$, respectively, and X represents a halogen atom.

The crystalline sulfide solid electrolyte of the present embodiment contains a lithium atom, a phosphorus atom, a sulfur atom, an oxygen atom, and a halogen atom as described above, has the aforementioned predetermined diffraction peaks, and has a composition represented by the aforementioned predetermined composition formula, so that the crystalline sulfide solid electrolyte of the present embodiment has a high ionic conductivity and can reduce the raw material cost. Here, with regard to having a high ionic conductivity, it is known that the ionic conductivity is improved by using lithium halide as described above. On the other hand, lithium halide is expensive, and a reduction in the amount of lithium halide used leads to a reduction in the raw material cost, but usually also leads to a reduction in ionic conductivity. That is, it can be said that the reduction of the raw material cost and the high ionic conductivity are in a trade-off relationship.

The crystalline sulfide solid electrolyte of the present embodiment has predetermined diffraction peaks in X-ray diffraction measurement and a predetermined peak in solid-state $^{31}$P-NMR measurement while substituting a part of sulfur atoms with oxygen atoms, and has a composition represented by the aforementioned predetermined composition formula, whereby the raw material cost can be reduced, that is, the crystalline sulfide solid electrolyte of the present embodiment has a high ionic conductivity even when the amount of the raw material containing a halogen atom, such as lithium halide, used is reduced. In addition, in a case in which the amount of the raw material containing a halogen atom, such as lithium halide, used is large, even in a case in which the amount of the raw material containing halogen atoms used is approximately the same as the amount of the raw material used in the related art such as PTLs 1 to 3 described above, a higher ionic conductivity is obtained (hereinafter, in the description herein, when simply referred to as "high ionic conductivity", it means any one of a high ionic conductivity obtained even in a case in which the amount of the raw material containing a halogen atom used is reduced, a higher ionic conductivity obtained in a case in which the amount of the raw material containing a halogen atom used is large, and both thereof). As described above, the crystalline sulfide solid electrolyte of the present embodiment can realize a high ionic conductivity and a reduction in raw material cost. In addition, in a case in which the amount of the raw material containing a halogen atom used is large (including a case in which the amount is the same as or larger than those in PTLs 1 to 3), it cannot be said that the raw material cost is reduced, but a solid electrolyte that is extremely useful is obtained from the viewpoint of obtaining a higher ionic conductivity that has not been obtained in the related art.

The crystalline sulfide solid electrolyte according to a second embodiment of the present embodiment is the crystalline sulfide solid electrolyte according to the first embodiment, in which in the composition formula (1), a product (x $\times$ y) of x and y is 0.0010 or more and 2.7 or less.

In the composition formula (1), each of x and y may be any numerical value selected from the aforementioned range, but when x and y are numerical values such that the product of x and y is within the above range, the numerical values are well-balanced, so that a crystalline sulfide solid electrolyte having a high ionic conductivity is easily obtained while reducing the raw material cost. More specifically, the following can be considered. As will be described later, since x means the substitution ratio to oxygen atoms when a part of the sulfur atoms are substituted with oxygen atoms, and y means the content of halogen atoms, when the product thereof is within the above range, it means that the amount of oxygen atoms and the amount of halogen atoms can be balanced. By substituting sulfur atoms with oxygen atoms, the crystal lattice size can be reduced, and further, by incorporating the amount of oxygen atoms and the amount of halogen atoms in a well-balanced manner, a crystal structure having a high ionic conductivity, such as a thio-LISICON Region II type crystal structure or an LGPS type crystal structure, can be stabilized. Therefore, it is considered that the content of halogen atoms, which has been considered to be necessary for stabilization of the crystal structure capable of expressing a high ionic conductivity, is reduced, that is, the raw material cost is reduced, and a high ionic conductivity is easily realized at the same time.

The crystalline sulfide solid electrolyte according to a third embodiment of the present embodiment is the crystalline sulfide solid electrolyte according to the first or second embodiment, in which the crystalline sulfide solid electrolyte has a peak attributable to $PO_4^{3-}$ observed at 9.2 ± 5.0 ppm in solid-state $^{31}$P-NMR measurement, and the crystalline sulfide solid electrolyte according to a fourth embodiment of the present embodiment is the crystalline sulfide solid electrolyte according to any one of the first to third embodiments, in which the crystalline sulfide solid electrolyte has a peak attributable to $PS_2O_2^{3-}$ observed at 70.3 ± 5.0 ppm in solid-state $^{31}$P-NMR measurement.

When the above peaks are observed by the solid-state $^{31}$P-NMR measurement, peaks at 2θ = 20.3 ± 0.5° and 29.6 ± 0.6° are likely to appear in the crystalline sulfide solid electrolyte of the present embodiment. As a result, a crystalline sulfide solid electrolyte having a high ionic conductivity is easily obtained while reducing the raw material cost.

The crystalline sulfide solid electrolyte according to a fifth embodiment of the present embodiment is the crystalline sulfide solid electrolyte according to any one of the first to fourth embodiments, in which in thermogravimetric and differential thermal measurement (measured at a temperature rising rate of 10°C/minute), at least two exothermic peaks of the crystalline sulfide solid electrolyte are measured, and a temperature difference between peak tops of the two exothermic peaks is 20°C or higher and 110°C or lower.

When the aforementioned two exothermic peaks are observed in the thermogravimetric and differential thermal measurement, diffraction peaks at 2θ = 20.3 ± 0.5° and 29.6 ± 0.6° are likely to appear in the crystalline sulfide solid electrolyte of the present embodiment. As a result, a crystalline sulfide solid electrolyte having a high ionic conductivity is easily obtained while reducing the raw material cost.

The crystalline sulfide solid electrolyte according to a sixth embodiment of the present embodiment is the crystalline sulfide solid electrolyte according to any one of the first to fifth embodiments, in which the halogen atom is at least one halogen atom selected from a chlorine atom, a bromine atom, and an iodine atom, and the crystalline sulfide solid electrolyte according to a seventh embodiment of the present embodiment is the crystalline sulfide solid electrolyte according to any one of the first to sixth embodiments, in which the halogen atom is a bromine atom and an iodine atom.

When at least one halogen atom selected from a chlorine atom, a bromine atom, and an iodine atom, that is, a chlorine atom, a bromine atom, or an iodine atom is adopted alone or two or more halogen atoms selected from these atoms are adopted as the halogen atom, a higher ionic conductivity is easily obtained. Among these, by adopting a bromine atom and an iodine atom at the same time, particularly high ionic conductivity is easily obtained.

The crystalline sulfide solid electrolyte according to an eighth embodiment of the present embodiment is the crystalline sulfide solid electrolyte according to any one of the first to seventh embodiments, in which in the composition formula (1), y satisfies 14.0 < y < 25.0.

When the crystalline sulfide solid electrolyte of the present embodiment has the specific composition represented by the above composition formula (1), the diffraction peaks at 2θ = 20.3 ± 0.5° and 29.6 ± 0.6° are likely to appear, and therefore, a crystalline sulfide solid electrolyte having a high ionic conductivity is easily obtained while reducing the raw material cost. In the above composition formula (1), when y satisfies 14.0 < y < 25.0, it means that the amount of the raw material containing a halogen atom used is larger, that is, the content of the halogen atom in the crystalline sulfide solid electrolyte is larger, and it is a use amount that is also studied in the sulfide solid electrolyte in the related art. However, in the crystalline sulfide solid electrolyte of the present embodiment, the diffraction peaks at 2θ = 20.3 ± 0.5° and 29.6 ± 0.6° are likely to appear, and the ionic conductivity higher than the ionic conductivity of the sulfide solid electrolyte of the related art is expressed.

The crystalline sulfide solid electrolyte according to a ninth embodiment of the present embodiment is the crystalline sulfide solid electrolyte according to any one of the first to eighth embodiments, having an ionic conductivity of 0.85 mS/cm or more, and the crystalline sulfide solid electrolyte according to a tenth embodiment of the present embodiment is the crystalline sulfide solid electrolyte according to any one of the first to ninth embodiments, having an ionic conductivity of 2.5 mS/cm or more.

The crystalline sulfide solid electrolyte of the present embodiment contains a lithium atom, a phosphorus atom, a sulfur atom, an oxygen atom, and a halogen atom, and has predetermined diffraction peaks, and therefore has a high ionic conductivity as in the range described above.

The crystalline sulfide solid electrolyte according to an eleventh embodiment of the present embodiment is the crystalline sulfide solid electrolyte according to any one of the first to tenth embodiments, which does not contain at least one metal atom selected from a sodium atom, a boron atom, an aluminum atom, a silicon atom, a germanium atom, an arsenic atom, a selenium atom, an antimony atom, a tellurium atom, a lead atom, and a bismuth atom.

Since the crystalline sulfide solid electrolyte of the present embodiment does not contain the above metal atom, the diffraction peaks at 2θ = 20.3 ± 0.5° and 29.6 ± 0.6° are likely to appear, and the content of impurities is reduced. As a result, a crystalline sulfide solid electrolyte having a high ionic conductivity is easily obtained while reducing the raw material cost.

The crystalline sulfide solid electrolyte according to a twelfth embodiment of the present embodiment is the crystalline sulfide solid electrolyte according to any one of the first to eleventh embodiments, in which the oxygen atom is derived from $P_2O_5$.

In a case in which $P_2O_5$ is employed as the raw material at the time of producing the crystalline sulfide solid electrolyte of the present embodiment, it becomes easy to substitute a part of the sulfur atoms with oxygen atoms, and thus oxygen atoms are easily incorporated into the structure of the solid electrolyte. According to this, in the crystalline sulfide solid electrolyte of the present embodiment, the diffraction peaks at $2\theta = 20.3 \pm 0.5°$ and $29.6 \pm 0.6°$ are likely to appear, and as a result, a crystalline sulfide solid electrolyte having a high ionic conductivity is easily obtained while reducing the raw material cost.

The crystalline sulfide solid electrolyte according to a thirteenth embodiment of the present embodiment is the crystalline sulfide solid electrolyte according to any one of the first to twelfth embodiments, which is a glass ceramic.

As described above, the glass ceramic is obtained by heating the amorphous solid electrolyte (glass component) to the crystallization temperature or higher. In the crystalline sulfide solid electrolyte thus obtained, the diffraction peaks at $2\theta = 20.3 \pm 0.5°$ and $29.6 \pm 0.6°$ are likely to appear, and as a result, a crystalline sulfide solid electrolyte having a high ionic conductivity is easily obtained while reducing the raw material cost.

In addition, the crystalline sulfide solid electrolyte according to a fourteenth embodiment of the present embodiment is a crystalline sulfide solid electrolyte containing a lithium atom, a phosphorus atom, a sulfur atom, an oxygen atom, and a halogen atom,

in which the crystalline sulfide solid electrolyte has diffraction peaks at $2\theta = 20.3 \pm 0.5°$ and $29.6 \pm 0.6°$ in X-ray diffraction measurement using a CuK$\alpha$ line, and
has a peak attributable to $PSO_3^{3-}$ observed at $39.6 \pm 5.0$ ppm in solid-state $^{31}$P-NMR measurement.

The crystalline sulfide solid electrolyte of the present embodiment has a structure in which the specific atoms of the lithium atom, the phosphorus atom, the sulfur atom, the oxygen atom, and the halogen atom express predetermined diffraction peaks in X-ray diffraction measurement and a predetermined peak in solid-state $^{31}$P-NMR measurement, and thus the crystalline sulfide solid electrolyte has a high ionic conductivity even in a reduction in raw material cost, that is, a reduction in the amount of raw material containing a halogen atom such as lithium halide used. In addition, in a case in which the amount of the raw material containing a halogen atom used is large (including a case in which the amount is the same as or larger than those in PTLs 1 to 3), it cannot be said that the raw material cost is reduced, but a solid electrolyte that is extremely useful is obtained from the viewpoint of obtaining a higher ionic conductivity that has not been obtained in the related art. As described above, the crystalline sulfide solid electrolyte of the present embodiment is an extremely useful solid electrolyte regardless of the amount of the raw material containing a halogen atom.

The crystalline sulfide solid electrolyte according to a fifteenth embodiment of the present embodiment is the crystalline sulfide solid electrolyte according to the fourteenth embodiment, in which the crystalline sulfide solid electrolyte has a peak attributable to $PO_4^{3-}$ observed at $9.2 \pm 5.0$ ppm in solid-state $^{31}$P-NMR measurement, and
the crystalline sulfide solid electrolyte according to a sixteenth embodiment of the present embodiment is the crystalline sulfide solid electrolyte according to the fourteenth or fifteenth embodiment, in which the crystalline sulfide solid electrolyte has a peak attributable to $PS_2O_2^{3-}$ observed at $70.3 \pm 5.0$ ppm in solid-state $^{31}$P-NMR measurement.

When the above peaks are observed by the solid-state $^{31}$P-NMR measurement, in the crystalline sulfide solid electrolyte according to the fourteenth embodiment, the peaks at $2\theta = 20.3 \pm 0.5°$ and $29.6 \pm 0.6°$ are likely to appear. As a result, a crystalline sulfide solid electrolyte having a high ionic conductivity is easily obtained while reducing the raw material cost.

[Crystalline Sulfide Solid Electrolyte]

The crystalline sulfide solid electrolyte of the present embodiment is a crystalline sulfide solid electrolyte containing a lithium atom, a phosphorus atom, a sulfur atom, an oxygen atom, and a halogen atom,

in which the crystalline sulfide solid electrolyte has diffraction peaks at $2\theta = 20.3 \pm 0.5°$ and $29.6 \pm 0.6°$ in X-ray diffraction measurement using a CuK$\alpha$ line, and
has a composition represented by the following composition formula (1):

$$(100 - y)(0.5)(\text{Li}_{3+2z}\text{P}(\text{S}_{1-x}\text{O}_x)_{4+z}) + (y)\text{LiX} \quad (1)$$

in which, x, y, and z satisfy $0.00060 \leq x \leq 0.15$, $3.0 \leq y < 25.0$, and $-0.17 \leq z \leq 1.5$, respectively, and X represents a halogen atom.

(Diffraction Peak)

The crystalline sulfide solid electrolyte of the present embodiment is a "crystalline" sulfide solid electrolyte because it has diffraction peaks at $2\theta$ = 20.3 $\pm$ 0.5° and 29.6 $\pm$ 0.6° in X-ray diffraction measurement using a CuK$\alpha$ line.

The peak positions of the diffraction peaks of the crystalline sulfide solid electrolytes of the present embodiment vary depending on the peak positions, but may be shifted in a range of $\pm$ 0.6° and $\pm$ 0.5°. In addition, the measurement method of the X-ray diffraction measurement using a CuK$\alpha$ line in the description herein will be described in Examples.

Preferred examples of the crystal structure in which diffraction peaks appear at $2\theta$ = 20.3 $\pm$ 0.5° and 29.6 $\pm$ 0.6° mainly include a thio-LISICON Region II type crystal structure and an LGPS type crystal structure. The intensities of the diffraction peaks appearing at $2\theta$ = 20.3 $\pm$ 0.5° and 29.6 $\pm$ 0.6° are different between the thio-LISICON Region II type crystal structure and the LGPS type crystal structure, and in the thio-LISICON Region II type crystal structure, the peak intensity of the diffraction peak at 20 = 20.3 $\pm$ 0.5° is stronger than the peak intensity of the diffraction peak at 20 = 29.6 $\pm$ 0.6°, and in the LGPS type crystal structure, the peak intensity of the diffraction peak at 20 = 29.6 $\pm$ 0.6° is stronger than the peak intensity of the diffraction peak at $2\theta$ = 20.3 $\pm$ 0.5°.

The crystalline sulfide solid electrolyte of the present embodiment preferably has at least one of a thio-LISICON Region II type crystal structure and an LGPS type crystal structure. This is because the diffraction peaks are likely to appear at 20 = 20.3 $\pm$ 0.5° and 29.6 $\pm$ 0.6°, and a high ionic conductivity is expressed.

As shown in Examples which will be described later, the crystalline sulfide solid electrolyte of the present embodiment includes those having mainly the thio-LISICON Region II type crystal structure, those having mainly the LGPS type crystal structure, and those in which these crystal structures are mixed. The crystalline sulfide solid electrolyte of the present embodiment may have any of the above crystal structures as long as it has the above diffraction peaks. Since such diffraction peaks appear, even if the amount of the raw material containing a halogen atom used is small (that is, even if the content of the halogen atom in the crystalline sulfide solid electrolyte is small), a high ionic conductivity is obtained, and in a case where the amount of the raw material containing a halogen atom used is large (that is, in a case where the content of the halogen atom in the crystalline sulfide solid electrolyte is large), the crystalline sulfide solid electrolyte has a high ionic conductivity equal to or higher than that of a conventional sulfide solid electrolyte containing a halogen atom to the same extent.

Here, regarding "mainly", "having mainly the thio-LISICON Region II type crystal structure" means that all of the diffraction peaks attributable to the thio-LISICON Region II type crystal structure can be confirmed, "having mainly the LGPS type crystal structure" means that all of the diffraction peaks attributable to the LGPS type crystal structure can be confirmed, and "mixed" means that both of the diffraction peaks can be confirmed or a state in which some of the diffraction peaks overlap and cannot be separated. As a criterion for judging "mainly", for example, when the ratio of a certain crystal structure to the whole crystal structure is 60% or more, it can be considered that the certain crystal structure is mainly possessed, and when the ratio is between them, that is, more than 40% and less than 60%, they are mixed.

In addition, "mainly" can also be judged by the intensity of a predetermined diffraction peak in a case where the thio-LISICON Region II type crystal structure and the LGPS type crystal structure coexist. When the intensity of the diffraction peak at $2\theta$ = 20.3 $\pm$ 0.5° attributable to the thio-LISICON Region II type crystal structure (hereinafter also referred to as "$I_1$") is compared with the intensity of the diffracted peak at $2\theta$ = 29.6 $\pm$ 0.6° attributable to the LGPS type crystal structure (hereinafter also referred to as "$I_2$"), when $I_1 > I_2$, it can be judged that the sulfide solid electrolyte has mainly the thio-LISICON Region II type crystal structure, and when $I_1 < I_2$, it can be judged that the sulfide solid electrolyte has mainly the LGPS type crystal structure. In addition, when $I_1 \approx I_2$ (here, "$\approx$" means $\pm$ 20% or less), it can be judged that the thio-LISICON Region II type crystal structure and the LGPS type crystal structure are mixed.

Examples of the thio-LISICON Region II type crystal structure include a $Li_{4-x}Ge_{1-x}P_xS_4$ system thio-LISICON Region II type crystal structure (see Kanno et al., Journal of The Electrochemical Society, 148 (7) A742-746 (2001)), and a crystal structure similar to the $Li_{4-x}Ge_{1-x}P_xS_4$ system thio-LISICON Region II type (see Solid State Ionics, 177 (2006), 2721-2725).

Examples of the LGPS type crystal structure include a crystal structure having a composition represented by $Li_{3+x}PS_{4-y}O_y$ (x satisfies -1 $\leq$ x $\leq$ 1, and y satisfies 0 < y < 4) (also referred to as "Li-P-S-O system sulfide solid electrolyte").

Herein, the notation of the crystal structure of the "$Li_{4-x}Ge_{1-x}P_xS_4$ system thio-LISICON Region II type" means that the crystal structure is found as a crystal structure composed of Li, Ge, P, and S atoms in the aforementioned literature. Since the sulfide solid electrolyte obtained by the production method of the present embodiment contains a lithium atom, a phosphorus atom, a sulfur atom, and a halogen atom, the sulfide solid electrolyte may not be represented by the composition formula of "$Li_{4-x}Ge_{1-x}P_xS_4$" in the "$Li_{4-x}Ge_{1-x}P_xS_4$ system thio-LISICON Region II type". However, in a case where the sulfide solid electrolyte obtained by the production method of the present embodiment has the same diffraction peak as the aforementioned "thio-LISICON Region II type crystal structure" (including the aforementioned "similar crystal structure"), it can be said that the sulfide solid electrolyte obtained by the production method of the present embodiment has a thio-LISICON Region II type crystal structure formed of a lithium atom, a phosphorus atom, a sulfur atom, and a halogen atom. This applies not only to the thio-LISICON Region II type crystal structure but also to the LGPS type crystal structure.

The crystalline sulfide solid electrolyte of the present embodiment preferably has at least one peak at 20 = 23.8° and 37.8°, and more preferably has at least one peak at $2\theta$ = 12.4°, 14.4°, and 31.5°, as a peak other than the above diffraction peaks. By further improving the crystallinity, these peaks appear, and as a result, a higher ionic conductivity is obtained. As described above, these diffraction peak positions vary within the ranges of $\pm$ 0.7°, $\pm$ 0.6°, and $\pm$ 0.5°.

The thio-LISICON Region II type crystal structure and the LGPS type crystal structure which the crystalline sulfide solid electrolyte of the present embodiment preferably has can be formed without passing through the amorphous solid electrolyte (glass component), or can be formed as a so-called glass ceramic which is obtained by heating the amorphous solid electrolyte (glass component) to the crystallization temperature or higher.

From the viewpoint of further improving the crystallinity and consequently obtaining a higher ionic conductivity, the crystalline sulfide solid electrolyte of the present embodiment is preferably glass ceramic.

(Constituent Atoms)

The crystalline sulfide solid electrolyte of the present embodiment contains a lithium atom, a phosphorus atom, a sulfur atom, an oxygen atom, and a halogen atom.

Examples of the halogen atom include a fluorine atom, a chlorine atom, a bromine atom, and an iodine atom. Among these halogen atoms, a chlorine atom, a bromine atom, and an iodine atom are preferable, and a bromine atom and an iodine atom are more preferable. As the halogen atom, these atoms can be used alone or a plurality of kinds of atoms can be contained.

The oxygen atoms in the crystalline sulfide solid electrolyte of the present embodiment are preferably derived from $P_2O_5$. The method for producing the crystalline sulfide solid electrolyte of the present embodiment is not particularly limited as long as it contains a lithium atom, a phosphorus atom, a sulfur atom, an oxygen atom, and a halogen atom and has the aforementioned diffraction peaks. There are no particular restrictions on the raw materials used, but it is preferable to use $P_2O_5$ as the raw material containing oxygen atoms when considering the easiness of replacement of a part of the sulfur atoms in the structure of the crystalline sulfide solid electrolyte with oxygen atoms.

In addition, the crystalline sulfide solid electrolyte of the present embodiment preferably does not contain at least one metal atom selected from a sodium atom, a boron atom, an aluminum atom, a silicon atom, a germanium atom, an arsenic atom, a selenium atom, an antimony atom, a tellurium atom, a lead atom, and a bismuth atom. When these atoms are not contained, in the crystalline sulfide solid electrolyte of the present embodiment, the diffraction peaks at 20 = 20.3 $\pm$ 0.5° and 29.6 $\pm$ 0.6° are likely to appear. As a result, a crystalline sulfide solid electrolyte having a high ionic conductivity is easily obtained while reducing the raw material cost.

Here, containing no metal atoms means literally containing no metal atoms (that is, 0% by mass), and also includes a case where metal atoms are inevitably mixed in, and the content in this case is 3% by mass or less, 2% by mass or less, 1% by mass, 0.5% by mass or less, 0.3% by mass or less, or 0.1% by mass or less, based on the total amount of the crystalline sulfide solid electrolyte.

(Composition)

As described above, the crystalline sulfide solid electrolyte of the present embodiment contains a lithium atom, a phosphorus atom, a sulfur atom, an oxygen atom, and a halogen atom, has the two diffraction peaks described above, that is, diffraction peaks at $2\theta$ = 20.3 $\pm$ 0.5° and 29.6 $\pm$ 0.6°, and has a composition represented by the following composition formula (1). By having the composition represented by the following composition formula (1), the diffraction peaks at 20 = 20.3 $\pm$ 0.5° and 29.6 $\pm$ 0.6° are likely to appear, and as a result, the raw material cost is reduced, and a high ionic conductivity is obtained. The type and composition of atoms constituting the crystalline sulfide solid electrolyte of the present embodiment can be confirmed by, for example, an ICP emission spectrophotometer.

$$(100 - \text{y})(0.5)(\text{Li}_{3+2z}\text{P}(\text{S}_{1-x}\text{O}_x)_{4+z}) + (\text{y})\text{LiX} \quad (1)$$

In the composition formula (1), x, y and z satisfy $0.00060 \le x \le 0.15$, $3.0 \le y < 25.0$ and $-0.17 \le z \le 1.5$. X represents a halogen atom.

x represents a substitution ratio of oxygen atoms in a case where a part of sulfur atoms is substituted with oxygen atoms. x satisfies $0.00060 \le x \le 0.15$, and from the viewpoints of facilitating the appearance of the above diffraction peaks, reducing the raw material cost as a result, and obtaining a high ionic conductivity, x is preferably 0.0010 or more, more preferably 0.0030 or more, and still more preferably 0.0050 or more, and the upper limit thereof is preferably 0.12 or less, more preferably 0.085 or less, still more preferably 0.065 or less, and yet still more preferably 0.045 or less.

Typically, the numerical range of x is preferably 0.00060 or more and 0.15 or less, 0.00060 or more and 0.12 or less, 0.00060 or more and 0.085 or less, 0.00060 or more and 0.065 or less, 0.00060 or more and 0.045 or less, 0.0010 or more and 0.15 or less, 0.0010 or more and 0.12 or less, 0.0010 or more and 0.085 or less, 0.0010 or more and 0.065 or less, 0.0010 or more and 0.045 or less, 0.0030 or more and 0.15 or less, 0.0030 or more and 0.12 or less, 0.0030 or more and 0.085 or less, 0.0030 or more and 0.065 or less, 0.0030 or more and 0.045 or less, 0.0050 or more and 0.15 or less, 0.0050 or more and 0.12 or less, 0.0050 or more and 0.085 or less, 0.0050 or more and 0.065 or less, or 0.0050 or more and 0.045 or less.

y means the content of halogen atoms. In the composition formula (1), LiX (lithium halide) is shown for the sake of simplicity, but the raw material containing a halogen atom is not limited to lithium halide, and for example, a halogen simple substance may be used as described later.

y satisfies $3.0 \leq y < 25.0$, and from the viewpoints of facilitating the appearance of the above diffraction peaks, reducing the raw material cost as a result, and obtaining a high ionic conductivity, y is preferably 4.5 or more, more preferably 7.0 or more, still more preferably 9.0 or more, yet still more preferably 10.5 or more, particularly preferably more than 14.0, and more particularly preferably 14.5 or more, and the upper limit thereof is preferably 22.0 or less, more preferably 21.0 or less, still more preferably 19.0 or less, and yet still more preferably 17.0 or less.

Typically, the numerical value range of y is preferably 3.0 or more and less than 25.0, 3.0 or more and 22.0 or less, 3.0 or more and 21.0 or less, 3.0 or more and 19.0 or less, 3.0 or more and 17.0 or less, 4.5 or more and less than 25.0, 4.5 or more and 22.0 or less, 4.5 or more and 21.0 or less, 4.5 or more and 19.0 or less, 4.5 or more and 17.0 or less, 7.0 or more and less than 25.0, 7.0 or more and 22.0 or less, 7.0 or more and 21.0 or less, 7.0 or more and 19.0 or less, 7.0 or more and 17.0 or less, 9.0 or more and less than 25.0, 9.0 or more and 22.0 or less, 9.0 or more and 21.0 or less, 9.0 or more and 19.0 or less, 9.0 or more and 17.0 or less, 10.5 or more and less than 25.0, 10.5 or more and 22.0 or less, 10.5 or more and 21.0 or less, 10.5 or more and 19.0 or less, 10.5 or more and 17.0 or less, more than 14.0 and less than 25.0, more than 14.0 and 22.0 or less, more than 14.0 and 21.0 or less, more than 14.0 and 19.0 or less, more than 14.0 and 17.0 or less, 14.5 or more and less than 25.0, 14.5 or more and 22.0 or less, 14.5 or more and 21.0 or less, 14.5 or more and 19.0 or less, or 14.5 or more and 17.0 or less.

z represents a deviation of a ratio of a lithium atom to a sulfur atom from a $Li_3PS_4$ structure which is a basic skeleton of the thio-LISICON Region II type crystal structure and the LGPS type crystal structure.

z satisfies $-0.17 \leq z \leq 1.5$, and from the viewpoints of facilitating the appearance of the above diffraction peaks, reducing the raw material cost as a result, and obtaining a high ionic conductivity, z is preferably -0.15 or more, more preferably -0.11 or more, still more preferably -0.080 or more, yet still more preferably -0.040 or more, and particularly preferably -0.020 or more, and the upper limit thereof is preferably 1.0 or less, more preferably 0.90 or less, still more preferably 0.60 or less, yet still more preferably 0.40 or less, and particularly preferably 0.20 or less.

Typically, the numerical value range of z is preferably -0.17 or more and 1.5 or less, -0.17 or more and 1.0 or less, -0.17 or more and 0.90 or less, -0.17 or more and 0.60 or less, -0.17 or more and 0.40 or less, -0.17 or more and 0.20 or less, -0.15 or more and 1.5 or less, -0.15 or more and 1.0 or less, -0.15 or more and 0.90 or less, -0.15 or more and 0.60 or less, -0.15 or more and 0.40 or less, -0.15 or more and 0.20 or less, -0.11 or more and 1.5 or less, -0.11 or more and 1.0 or less, -0.11 or more and 0.90 or less, -0.11 or more and 0.60 or less, -0.11 or more and 0.40 or less, -0.11 or more and 0.20 or less, -0.080 or more and 1.5 or less, -0.080 or more and 1.0 or less, -0.080 or more and 0.90 or less, -0.080 or more and 0.60 or less, -0.080 or more and 0.40 or less, -0.080 or more and 0.20 or less, -0.040 or more and 1.5 or less, -0.040 or more and 1.0 or less, -0.040 or more and 0.90 or less, -0.040 or more and 0.60 or less, -0.040 or more and 0.40 or less, -0.040 or more and 0.20 or less, -0.020 or more and 1.5 or less, -0.020 or more and 1.0 or less, -0.020 or more and 0.90 or less, -0.020 or more and 0.60 or less, -0.020 or more and 0.40 or less, or -0.020 or more and 0.20 or less.

The product ($x \times y$) of x and y is preferably 0.0010 or more, more preferably 0.0050 or more, still more preferably 0.010 or more, yet still more preferably 0.025 or more, and particularly preferably 0.050 or more, and the upper limit thereof is preferably 2.7 or less, more preferably 2.0 or less, still more preferably 1.25 or less, yet still more preferably 0.75 or less, particularly preferably 0.60 or less, more particularly preferably 0.45 or less, and still more particularly preferably 0.28 or less. As described above, x and y can each take any numerical value selected from the above range, but by adopting x and y such that the product ($x \times y$) of x and y is within the above range, the above x and y take well-balanced numerical values, so that the above diffraction peaks are likely to appear, and a crystalline sulfide solid electrolyte having a high ionic conductivity is easily obtained while reducing the raw material cost.

Further, typically, the numerical value range of the product ($x \times y$) of x and y is preferably 0.0010 or more and 2.7 or less, 0.0010 or more and 2.0 or less, 0.0010 or more and 1.25 or less, 0.0010 or more and 0.75 or less, 0.0010 or more and 0.60 or less, 0.0010 or more and 0.45 or less, 0.0010 or more and 0.28 or less, 0.0050 or more and 2.7 or less, 0.0050 or more and 2.0 or less, 0.0050 or more and 1.25 or less, 0.0050 or more and 0.75 or less, 0.0050 or more and 0.60 or less, 0.0050 or more and 0.45 or less, 0.0050 or more and 0.28 or less, 0.010 or more and 2.7 or less, 0.010 or more and 2.0 or less, 0.010 or more and 1.25 or less, 0.010 or more and 0.75 or less, 0.010 or more and 0.60 or less, 0.010 or more and 0.45 or less, 0.010 or more and 0.28 or less, 0.025 or more and 2.7 or less, 0.025 or more and 2.0 or less, 0.025 or more and 1.25 or less, 0.025 or more and 0.75 or less, 0.025 or more and 0.60 or less, 0.025 or more and 0.45 or less, 0.025 or more and 0.28 or less, 0.050 or more and 2.7 or less, 0.050 or more and 2.0 or less, 0.050 or more and 1.25 or less, 0.050 or more and 0.75 or less, 0.050 or more and 0.60 or less, 0.050 or more and 0.45 or less, or 0.050 or more and 0.28 or less.

In the above composition formula (1), X represents a halogen atom. The halogen atom is the same as the halogen atom described above as the halogen atom constituting the crystalline sulfide solid electrolyte of the present embodiment.

(Solid-State $^{31}$P-NMR Spectrum)

The crystalline sulfide solid electrolyte of the present embodiment is preferably a crystalline sulfide solid electrolyte having a peak attributable to $PSO_3^{3-}$ observed at $39.6 \pm 5.0$ ppm in solid-state $^{31}$P-NMR measurement. Further, it is preferable that the crystalline sulfide solid electrolyte has a peak attributable to $PO_4^{3-}$ observed at $9.2 \pm 5.0$ ppm, and a peak attributable to $PS_2O_2^{3-}$ observed at $70.3 \pm 5.0$ ppm. A method of measuring solid-state $^{31}$P-NMR in the description herein will be described in Examples. In addition, the peak in the solid-state $^{31}$P-NMR measurement may be shifted within a range of $\pm 5.0$ ppm, and further within a range of $\pm 4.0$ ppm, $\pm 3.0$ ppm, and $\pm 2.0$ ppm.

The peak attributable to $PSO_3^{3-}$, the peak attributable to $PO_4^{3-}$, and the peak attributable to $PS_2O_2^{3-}$ indicate that at least the crystalline sulfide solid electrolyte of the present embodiment has an oxygen atom in the structure thereof. The crystalline sulfide solid electrolyte having the aforementioned peak according to the solid-state $^{31}$P-NMR spectrum is one in which an oxygen atom is incorporated into the structure, that is, one in which a part of sulfur atoms is replaced with oxygen atoms, and therefore, it has two diffraction peaks according to the X-ray diffraction measurement using a CuK$\alpha$ line. As a result, higher ionic conductivity can be obtained.

(Exothermic Peak)

It is preferable that the crystalline sulfide solid electrolyte of the present embodiment is one in which in thermogravimetric and differential thermal measurement (measured at a temperature rising rate of 10°C/minute), at least two exothermic peaks of the crystalline sulfide solid electrolyte are measured, and a temperature difference between peak tops of the two exothermic peaks is 20°C or higher and 110°C or lower. Here, the measurement method of the thermogravimetric and differential thermal measurement in the description herein will be described in Examples.

When the aforementioned two exothermic peaks are observed in the thermogravimetric and differential thermal measurement, diffraction peaks at $2\theta = 20.3 \pm 0.5°$ and $29.6 \pm 0.6°$ are likely to appear in the crystalline sulfide solid electrolyte of the present embodiment. In this case, the temperature difference ($\Delta Tc = Tc2 - Tc1$) is preferably 20°C or higher and 110°C or lower, where Tc1 is the temperature of the peak top on the low temperature side and Tc2 is the temperature of the peak top on the high temperature side of the two exothermic peaks. The lower limit of the temperature difference is preferably 30°C or higher, more preferably 35°C or higher, still more preferably 45°C or higher, yet still more preferably 50°C or higher, and particularly preferably 55°C or higher, and the upper limit thereof is preferably 100°C or lower, more preferably 95°C or lower, and still more preferably 90°C or lower.

In the thermogravimetric and differential thermal measurement, the temperature (Tc1) of the peak top of the exothermic peak on the low temperature side is preferably 180°C or higher, more preferably 185°C or higher, still more preferably 190°C or higher, and yet still more preferably 195°C or higher, and the upper limit thereof is preferably 330°C or lower, more preferably 325°C or lower, still more preferably 310°C or lower, and yet still more preferably 300°C or lower. On the other hand, the temperature (Tc2) of the peak top of the exothermic peak on the high temperature side is preferably 180°C or higher, more preferably 190°C or higher, still more preferably 220°C or higher, yet still more preferably 240°C or higher, and particularly preferably 255°C or higher.

It can be said that the crystalline sulfide solid electrolyte having diffraction peaks at $2\theta = 20.3 \pm 0.5°$ and $29.6 \pm 0.6°$ is one in which the two exothermic peaks are easily observed. The fact that these two exothermic peaks are observed means that it is easy to obtain a crystalline sulfide solid electrolyte, in particular, a crystalline sulfide solid electrolyte having a thio-LISICON Region II type crystal structure or an LGPS type crystal structure expressing a high ionic conductivity. Accordingly, when the two exothermic peaks are observed in the thermogravimetric and differential thermal measurement, a crystalline sulfide solid electrolyte having a high ionic conductivity can be easily obtained while reducing the raw material cost.

(Ionic Conductivity)

The ionic conductivity of the crystalline sulfide solid electrolyte of the present embodiment may be 0.85 mS/cm or more, further 1.0 mS/cm or more, 1.5 mS/cm or more, 2.0 mS/cm or more, 2.5 mS/cm or more, 3.0 mS/cm or more, 3.5 mS/cm or more, 4.0 mS/cm or more, 4.4 mS/cm or more, or 5.0 mS/cm or more.

Thus, the crystalline sulfide solid electrolyte of the present embodiment has a high ionic conductivity.

For example, when the amount of the raw material containing a halogen atom used is small, more specifically, even when y in the composition formula (1) is as small as 10.0 or less, the ionic conductivity can be 0.85 mS/cm or more, even 1.0 mS/cm or more, 1.5 mS/cm or more, or 2.0 mS/cm or more. On the other hand, when the amount of the raw material containing a halogen atom used is large, more specifically, when y in the composition formula (1) is larger than 10.0, the ionic conductivity can be 2.0 mS/cm or more, 2.5 mS/cm or more, 3.0 mS/cm or more, 3.5 mS/cm or more, 4.0 mS/cm or more, 4.4 mS/cm or more, or 5.0 mS/cm or more.

(Crystalline Sulfide Solid Electrolyte of Another Embodiment)

The crystalline sulfide solid electrolyte according to the fourteenth embodiment, which is another embodiment of the crystalline sulfide solid electrolyte, is a crystalline sulfide solid electrolyte containing a lithium atom, a phosphorus atom, a sulfur atom, an oxygen atom, and a halogen atom,

in which the crystalline sulfide solid electrolyte has diffraction peaks at $2\theta = 20.3 \pm 0.5°$ and $29.6 \pm 0.6°$ in X-ray diffraction measurement using a $CuK\alpha$ line, and
has a peak attributable to $PSO_3^{3-}$ observed at $39.6 \pm 5.0$ ppm in solid-state $^{31}$P-NMR measurement.

In the crystalline sulfide solid electrolyte of another embodiment, the inclusion of a lithium atom, a phosphorus atom, a sulfur atom, an oxygen atom, and a halogen atom, the predetermined diffraction peaks in the X-ray diffraction measurement, and the predetermined peak in the solid-state $^{31}$P-NMR measurement are the same as those described above in the crystalline sulfide solid electrolyte of the present embodiment. In addition, regarding the predetermined peaks in the solid-state $^{31}$P-NMR measurement, the fact that a peak attributable to $PO_4^{3-}$ is observed at $9.2 \pm 5.0$ ppm and a peak attributable to $PS_2O_2^{3-}$ is observed at $0.3 \pm 5.0$ ppm is also preferable as described above in the crystalline sulfide solid electrolyte of the present embodiment. As described above, the lithium atom, the phosphorus atom, the sulfur atom, the oxygen atom, and the halogen atom have a structure that causes predetermined diffraction peaks in X-ray diffraction measurement and a predetermined peak in solid-state $^{31}$P-NMR measurement to be expressed, whereby a high ionic conductivity is obtained.

The composition of the crystalline sulfide solid electrolyte of another embodiment is not particularly limited as long as it contains a lithium atom, a phosphorus atom, a sulfur atom, an oxygen atom, and a halogen atom, and has predetermined diffraction peaks, and a predetermined peak attributable to $PSO_3^{3-}$ is observed. From the viewpoint of facilitating the appearance of predetermined diffraction peaks in X-ray diffraction measurement and a predetermined peak in solid-state $^{31}$P-NMR measurement, it is preferable to have the composition represented by the aforementioned composition formula (1).

[Applications]

Since the crystalline sulfide solid electrolyte of the present embodiment has a high ionic conductivity and excellent battery performance while reducing the raw material cost, for example, the crystalline sulfide solid electrolyte is suitably used in an electrode mixture in combination with an electrode active material or in a lithium ion battery.

In the case of using the sulfide solid electrolyte of the present embodiment in a lithium ion battery, the sulfide solid electrolyte may be used in a positive electrode layer, may be used in a negative electrode layer, or may be used in an electrolyte layer.

When used in the positive electrode layer, it can be used as the electrode mixture including the crystalline sulfide solid electrolyte of the present embodiment and the positive electrode active material, and when used in the negative electrode layer, it can be used as the electrode mixture including the crystalline sulfide solid electrolyte of the present embodiment and the negative electrode active material. The crystalline sulfide solid electrolyte may be used as it is in the electrolyte layer.

[Electrode Mixture]

As described above, the electrode mixture contains the crystalline sulfide solid electrolyte of the present embodiment and the electrode active material. As the electrode active material, a positive electrode active material and a negative electrode active material are adopted respectively, depending on whether the electrode mixture is used for a positive electrode or a negative electrode.

As the positive electrode active material, in relation to the negative electrode active material, any atom can be adopted without particular limitation, as long as it is an atom adopted as an atom that expresses ionic conductivity, preferably the one which can promote battery chemical reactions involving the movement of lithium ions caused by lithium atoms. Examples of the positive electrode active materials capable of insertion/extraction of lithium ions include oxide-based positive electrode active materials, sulfide-based positive electrode active materials.

As the oxide-based positive electrode active materials, lithium-containing transition metal composite oxides such as LMO (lithium manganate), LCO (lithium cobalt oxide), NMC (lithium nickel manganese cobalt oxide), NCA (lithium nickel cobalt aluminate), LNCO (lithium nickel cobalt oxide), and olivine type compounds ($LiMeNPO_4$, Me=Fe, Co, Ni, Mn), are preferred.

Examples of the sulfide-based positive electrode active material include titanium sulfide ($TiS_2$), molybdenum sulfide ($MoS_2$), iron sulfide ($FeS$, $FeS_2$), copper sulfide ($CuS$), nickel sulfide ($Ni_3S_2$).

In addition to the above positive electrode active materials, niobium selenide ($NbSe_3$) or the like can also be used.

The positive electrode active material can be used alone or in combination of multiple types.

As the negative electrode active material, any materials can be used without any particular limitations as long as it can promote battery chemical reactions involving the movement of lithium ions preferably caused by lithium atoms, such as an atoms adopted as atoms that express ionic conductivity, preferably metals that can form alloys with lithium atoms, oxides thereof, and alloys of the metals with lithium atoms. As the negative electrode active material capable of insertion/extraction of lithium ions, any known negative electrode active material in the field of batteries can be used without limitation.

As such a negative electrode active material, for example, in the case of constituting a lithium ion battery, a silicon-based active material such as Si, a Si alloy, and silicon oxide, a carbon-based active material such as graphite and hard carbon, various oxide-based active materials such as lithium titanate, a metal capable of forming metal lithium or an alloy with metal lithium such as metal lithium, metal indium, metal aluminum, metal silicon, and metal tin, an oxide of these metals, an alloy of these metals and metal lithium, and the like can be used.

The electrode active material may have a coating layer in which the surface is coated.

Examples of the material forming the coating layer include an ion conductor such as a nitride, an oxide, or a composite thereof of an atom that expresses ionic conductivity in the sulfide solid electrolyte, preferably a lithium atom. Specifically, examples include conductors having a LISICON type crystal structure such as $Li_{4-2x}Zn_xGeO_4$, whose main structure is lithium nitride ($Li_3N$) or $Li_4GeO_4$, conductors having a thio-LISICON type crystal structure such as $Li_{4-x}Ge_{1-x}P_xS_4$ having a $Li_3PO_4$ type skeleton structure, conductors having perovskite crystal structure such as $La_{2/3-x}Li_{3x}TiO_3$, and conductor having NASICON type crystal structure such as $LiTi_2(PO_4)_3$.

In addition, examples include lithium titanate such as $Li_yTi_{3-y}O_4$ ($0 < y < 3$), $Li_4Ti_5O_{12}$ (LTO), lithium metal oxides of metals belonging to Group 5 of the periodic table such as $LiNbO_3$ and $LiTaO_3$, also, oxide-based conductors such as $Li_2O$-$B_2O_3$-$P_2O_5$ system, $Li_2O$-$B_2O_3$-$ZnO$ system, and $Li_2O$-$Al_2O_3$-$SiO_2$-$P_2O_5$-$TiO_2$ system.

The electrode active material having a coating layer can be obtained, for example, by attaching a solution containing various atoms constituting the material forming the coating layer on the surface of the electrode active material, and then firing the electrode active material after attachment, preferably at 200°C or higher and 400°C or lower.

Here, as the solution containing various atoms, a solution containing alkoxides of various metals such as lithium ethoxide, titanium isopropoxide, niobium isopropoxide, and tantalum isopropoxide may be used. In this case, as the solvent, an alcoholic solvent such as ethanol or butanol; an aliphatic hydrocarbon solvent such as hexane, heptane or octane; or an aromatic hydrocarbon solvent such as benzene, toluene or xylene, may be used.

Further, the aforementioned attachment may be performed by immersion, spray coating, or the like.

From the viewpoint of improving production efficiency and battery performance, the firing temperature is preferably 200°C or higher and 400°C or lower, more preferably 250°C or higher and 390°C or lower, and the firing time is usually about 1 minute to 10 hours, preferably 10 minutes to 4 hours.

The coating ratio of the coating layer is, based on the surface area of the electrode active material, preferably 90% or more, more preferably 95% or more, and still more preferably 100%, that is, the entire surface is preferably coated. Further, the thickness of the coating layer is preferably 1 nm or more, more preferably 2 nm or more, and the upper limit is preferably 30 nm or less, more preferably 25 nm or less.

For the thickness of the coating layer, it can be measured by cross-sectional observation using a transmission electron microscope (TEM), and for the coating ratio, it can be calculated from the thickness of the coating layer, elemental analysis value, and BET specific surface area.

(Other Component)

The electrode mixture may contain other components such as a conductive material and a binder, in addition to the crystalline sulfide solid electrolyte of the present embodiment and the electrode active material described above. That is, the electrode mixture may use other components such as a conductive material and a binder, in addition to the crystalline sulfide solid electrolyte of the present embodiment and the electrode active material described above. Other components such as the conductive agent and the binder may be further added to and mixed with the aforementioned crystalline sulfide solid electrolyte and the electrode active material in mixing the crystalline sulfide solid electrolyte and the electrode active material.

Examples of the conductive material include, from the viewpoint of improving battery performance by improving electronic conductivity, carbon-based materials such as artificial graphite, graphite carbon fiber, resin fired carbon, pyrolytic vapor deposition carbon, coke, mesocarbon microbeads, furfuryl alcohol resin fired carbon, polyacene, pitch-based carbon fiber, vapor deposition carbon fiber, natural graphite, and non-graphitizable carbon.

By using the binder, the strength is improved, when positive electrode and negative electrode are prepared.

The binder is not particularly limited as long as it can provide functions such as binding property and flexibility, and examples thereof include fluoropolymers such as polytetrafluoroethylene and polyvinylidene fluoride, thermoplastic elastomers such as butylene rubber, styrene-butadiene rubber, and various resins such as acrylic resin, acrylic polyol resin, polyvinyl acetal resin, polyvinyl butyral resin, and silicone resin.

The blending ratio (mass ratio) of the electrode active material and the crystalline sulfide solid electrolyte in the electrode mixture is preferably 99.5:0.5 to 40:60, more preferably 99:1 to 50:50, and still more preferably 98:2 to 60:40, in order to improve battery performance and consider production efficiency.

When containing a conductive material, the content of the conductive material in the electrode mixture is not particularly limited, however in order to improve battery performance and consider production efficiency, it is preferably 0.5% by mass or more, more preferably 1% by mass or more, and still more preferably 1.5% by mass or more, and the upper limit thereof is preferably 10% by mass or less, more preferably 8% by mass or less, and still more preferably 5% by mass or less.

Further, when containing a binder, the content of the binder in the electrode mixture is not particularly limited, however in order to improve battery performance and consider production efficiency, it is preferably 1% by mass or more, more preferably 3% by mass or more, and still more preferably 5% by mass or more, and the upper limit thereof is preferably 20% by mass or less, more preferably 15% by mass or less, and still more preferably 10% by mass or less.

[Lithium Ion Battery]

The crystalline sulfide solid electrolyte of the present embodiment can also be used for a lithium ion battery as described above. For example, the lithium ion battery may contain at least one selected from the sulfide solid electrolyte of the present embodiment and the electrode mixture.

The configuration of the lithium ion battery is not particularly limited as long as the lithium ion battery includes the crystalline sulfide solid electrolyte of the present embodiment described above and the electrode mixture containing the same, and may be any configuration of a widely used lithium ion battery.

The lithium ion battery preferably includes, for example, a positive electrode layer, a negative electrode layer, an electrolyte layer, and a current collector. As the positive electrode layer and the negative electrode layer, an electrode mixture containing the crystalline sulfide solid electrolyte of the present embodiment is preferably used, and as the electrolyte layer, the crystalline sulfide solid electrolyte of the present embodiment is preferably used.

As the current collector, a known current collector may be used. For example, a layer obtained by coating a material that reacts with the solid electrolyte, such as Au, Pt, Al, Ti, or Cu, with Au or the like can be used.

(Method for Producing Crystalline Sulfide Solid Electrolyte)

The method for producing the crystalline sulfide solid electrolyte of the present embodiment will be described. The crystalline sulfide solid electrolyte of the present embodiment described above is obtained by a production method including mixing raw material inclusions containing, for example, a lithium atom, a sulfur atom, a phosphorus atom, an oxygen atom, and a halogen atom.

(Raw Material Inclusion)

The raw material inclusion contains a lithium atom, a phosphorus atom, a sulfur atom, an oxygen atom, and a halogen atom. More specifically, the raw material inclusion is an inclusion containing a material (hereinafter, also referred to as "raw material") containing one or more kinds selected from the group consisting of these atoms, and preferably contains two or more kinds of raw materials.

Representative examples of the raw material preferably include a raw material containing at least two kinds of atoms selected from the aforementioned atoms, for example, lithium sulfide and a phosphorus sulfide, such as diphosphorus trisulfide ($P_2S_3$) and diphosphorus pentasulfide ($P_2S_5$), and a raw material containing one kind of an atom selected from the aforementioned atoms, for example, elemental phosphorus and elemental sulfur.

Among these, lithium sulfide and phosphorus sulfides such as diphosphorus trisulfide ($P_2S_3$) and diphosphorus pentasulfide ($P_2S_5$) are preferred, and among the phosphorus sulfides, diphosphorus pentasulfide ($P_2S_5$) is preferred.

Examples of the raw material also preferably include a material containing a halogen atom. Typical examples thereof preferably include lithium halides such as lithium fluoride, lithium chloride, lithium bromide, and lithium iodide; and halogen simple substances such as fluorine ($F_2$), chlorine ($Cl_2$), bromine ($Br_2$), and iodine ($I_2$).

As the raw material, a material containing an oxygen atom is also preferably exemplified. Typical examples thereof preferably include diphosphorus pentoxide ($P_2O_5$), lithium oxide ($Li_2O$), and lithium hydroxide (LiOH). Among them, as described above, diphosphorus pentoxide ($P_2O_5$) is preferable.

Examples of the raw material also include a material containing at least one kind of atoms selected from at least a lithium atom, a phosphorus atom, a sulfur atom, an oxygen atom, and a halogen atom, for example, a phosphorus halide, such as various kinds of a phosphorus fluoride ($PF_3$ and $PF_5$), various kinds of a phosphorus chloride ($PCl_3$, $PCl_5$, and $P_2Cl_4$), various kinds of a phosphorus bromide ($PBr_3$ and $PBr_5$), and various kinds of a phosphorus iodide ($PI_3$ and $P_2I_4$); a thiophosphoryl halide, such as thiophosphoryl fluoride ($PSF_3$), thiophosphoryl chloride ($PSCl_3$), thiophosphoryl bromide ($PSBr_3$), thiophosphoryl iodide ($PSI_3$), thiophosphoryl dichlorofluoride ($PSCl_2F$), and thiophosphoryl dibromofluoride ($PSBr_2F$); a lithium compound, such as lithium oxide, lithium hydroxide, and lithium carbonate; an alkali metal sulfide, such as sodium sulfide, potassium sulfide, rubidium sulfide, and cesium sulfide; a metal sulfide, such as silicon sulfide, germanium sulfide, boron sulfide, gallium sulfide, tin sulfide ($SnS$ and $SnS_2$), aluminum sulfide, and zinc sulfide; a phosphoric acid compound, such as sodium phosphate and lithium phosphate; a halide of an alkali metal other than lithium, such as sodium halides, e.g., sodium iodide, sodium fluoride, sodium chloride, and sodium bromide; a metal halide, such as an aluminum halide, a silicon halide, a germanium halide, an arsenic halide, a selenium halide, a tin halide, an antimony halide, a tellurium halide, and a bismuth halide; and a phosphorus oxyhalide, such as phosphorus oxychloride ($POCl_3$) and phosphorus oxybromide ($POBr_3$).

In addition, $Li_3PS_4$, $Li_7P_3S_{11}$, or the like having a $PS_4$ structure, which can act as a solid electrolyte, can also be used as the raw material. For example, when $Li_3PS_4$ is used as the raw material, $Li_3PS_4$ may be prepared in advance by producing $Li_3PS_4$ using, for example, lithium sulfide, diphosphorus pentasulfide, or the like, and then used as the raw material.

The raw material such as lithium sulfide is preferably in the form of particles. Since the raw materials in the form of particles are easily mixed with each other, the crystalline sulfide solid electrolyte is easily produced.

The average particle diameter ($D_{50}$) of the particles of the raw material may be, for example, 0.1 $\mu$m or more and 1,000 $\mu$m or less, 0.5 $\mu$m or more and 100 $\mu$m or less, or 1 $\mu$m or more and 20 $\mu$m or less, in consideration of the reaction of the raw materials, the handleability, and the like. In the description herein, the average particle diameter ($D_{50}$) is a particle diameter which reaches 50% (volume-based) of the whole by sequentially integrating particles from the smallest particle diameter when a particle size distribution integration curve is drawn, and is an average particle diameter in which the volume distribution can be measured using, for example, a laser diffraction/scattering type particle size distribution measuring device.

The crystalline sulfide solid electrolyte of the present embodiment may be used by appropriately combining the aforementioned raw materials, and may have a composition represented by the aforementioned composition formula (1). The crystalline sulfide solid electrolyte contains a lithium atom, a phosphorus atom, a sulfur atom, an oxygen atom, and a halogen atom, and facilitates the appearance of the aforementioned diffraction peaks, and as a result, it becomes easy to reduce the raw material cost and to obtain a high ionic conductivity. Incidentally, the composition represented by the composition formula (1) of the crystalline sulfide solid electrolyte of the present embodiment can be confirmed by an ICP emission spectrophotometer as described above, but since an oxygen atom is contained, a deviation may occur between the actual composition and the measured value. In such a case, since it is confirmed that there is almost no deviation between the material used as a raw material and its blending ratio and the composition obtained by calculating from the said material and its blending ratio, it can also be regarded as the composition obtained by calculating from the material used as a raw material and its blending ratio.

In the case of using lithium sulfide and diphosphorus pentasulfide as the raw materials, the ratio of lithium sulfide with respect to the total of lithium sulfide and diphosphorus pentasulfide is preferably 45.0 mol% or more, more preferably 60.0 mol% or more, still more preferably 67.0 mol% or more, yet still more preferably 70.0 mol% or more, and particularly preferably 73.0 mol% or more, and the upper limit thereof is preferably 85.0 mol% or less, more preferably 80.0 mol% or less, still more preferably 78.0 mol% or less, and yet still more preferably 76.0 mol% or less, from the viewpoint of obtaining a higher ionic conductivity. The numerical value range thereof is typically preferably 45.0 to 85.0 mol%, 55.0 to 85.0 mol%, 65.0 to 85.0 mol%, 67.0 to 85.0 mol%, 70.0 to 85.0 mol%, 73.0 to 85.0 mol%, 55.0 to 78.0 mol%, 65.0 to 78.0 mol%, 67.0 to 78.0 mol%, 70.0 to 78.0 mol%, 73.0 to 78.0 mol%, 70.0 to 76.0 mol%, or 73.0 to 76.0 mol%.

In the case where the raw material inclusion contains diphosphorus pentasulfide and diphosphorus pentoxide as a raw material containing oxygen atoms, the ratio of diphosphorus pentoxide with respect to the total of these is preferably 0.1 mol% or more, more preferably 0.3 mol% or more, still more preferably 0.5 mol% or more, and yet still more preferably 0.8 mol% or more, and the upper limit thereof is preferably 22.0 mol% or less, more preferably 18.0 mol% or less, still more preferably 12.0 mol% or less, yet still more preferably 8.0 mol% or less, and particularly preferably 5.0 mol% or less, from the viewpoint of achieving higher ionic conductivity and a reduction in the raw material cost.

The numerical value range thereof is typically preferably 0.1 to 22.0 mol%, 0.1 to 18.0 mol%, 0.1 to 12.0 mol%, 0.1 to 8.0 mol%, 0.1 to 5.0 mol%, 0.3 to 22.0 mol%, 0.3 to 18.0 mol%, 0.3 to 12.0 mol%, 0.3 to 8.0 mol%, 0.3 to 5.0 mol%, 0.5 to 22.0 mol%, 0.5 to 18.0 mol%, 0.5 to 12.0 mol%, 0.5 to 8.0 mol%, 0.5 to 5.0 mol%, 0.8 to 22.0 mol%, 0.8 to 18.0 mol%, 0.8 to 12.0 mol%, 0.8 to 8.0 mol%, or 0.8 to 5.0 mol%.

In the case where the raw material inclusion contains lithium sulfide, diphosphorus pentasulfide, a lithium halide, a raw material containing an oxygen atom, and other raw materials used as necessary, the content of lithium sulfide and diphosphorus pentasulfide with respect to the total of these is preferably 60.0 mol% or more, more preferably 65.0 mol% or more, still more preferably 70.0 mol% or more, and yet still more preferably 80.0 mol% or more, and the upper limit thereof is preferably less than 100 mol%, more preferably 95.0 mol% or less, still more preferably 90.0 mol% or less, and yet still more preferably 85.0 mol% or less.

In addition, in the case of containing lithium sulfide, diphosphorus pentasulfide, a lithium halide, a raw material containing an oxygen atom, and other raw materials used as necessary, the content of lithium halide with respect to the total of lithium sulfide, diphosphorus pentasulfide, the lithium halide, and the raw material containing an oxygen atom is preferably 1.0 mol% or more, more preferably 3.0 mol% or more, still more preferably 5.0 mol% or more, and yet still more preferably 8.0 mol% or more, and the upper limit thereof is preferably 22.0 mol% or less, more preferably 21.0 mol% or less, still more preferably 20.0 mol% or less, yet still more preferably 19.0 mol% or less, and particularly preferably 17.5 mol% or less.

(Mixing)

The method for mixing the raw material inclusion containing a lithium atom, a sulfur atom, a phosphorus atom, an oxygen atom, and a halogen atom is not particularly limited as long as the aforementioned raw materials can be mixed. For example, a pulverizer, a mixer, a stirrer, or the like may be used.

When a pulverizer is used, pulverization of the raw materials occurs, but mixing also occurs at the same time. Mixing of the raw materials can also take place using a mixer and a stirrer. Therefore, it can also be said that the crystalline sulfide solid electrolyte of the present embodiment can be preferably produced by stirring, mixing, pulverizing, or a treatment combining any of these of two or more raw materials selected from materials containing at least one atom of a lithium atom, a sulfur atom, a phosphorus atom, an oxygen atom, and a halogen atom.

Examples of the stirrer and the mixer include a mechanical stirring type mixer which is provided with a stirring blade in a reaction tank and is capable of stirring (which can also be referred to as mixing by stirring or stirring and mixing). Examples of the mechanical stirring type mixer include a high-speed stirring type mixer and a double-arm type mixer. Examples of the high-speed stirring type mixer include a vertical axis rotating type mixer and a horizontal axis rotating type mixer, and mixers of any of these types may be used.

Examples of the shape of the stirring blade used in the mechanical stirring type mixer include a blade type, an arm type, an anchor type, a paddle type, a full-zone type, a ribbon type, a multi-stage blade type, a double-arm type, a shovel type, a twin-screw blade type, a flat blade type, and a C-blade type. From the viewpoint of more efficiently promoting the reaction of raw materials, a shovel type, a flat blade type, a C-blade type, an anchor type, a paddle type, and a full-zone type are preferable, and an anchor type, a paddle type, and a full-zone type are more preferable.

In a case where the mechanical stirring type mixer is used, the rotation speed of the stirring blade may be appropriately adjusted according to the capacity and temperature of the fluid in the reaction tank, and the shape of the stirring blade, and there is no particular limitation, but the rotation speed of the stirring blade may be usually set to about 5 rpm or more and 400 rpm or less. From the viewpoint of more efficiently promoting the reaction of raw materials, the rotation speed of the stirring blade is preferably 10 rpm or more and 300 rpm or less, more preferably 15 rpm or more and 250 rpm or less, and still more preferably 20 rpm or more and 200 rpm or less.

The temperature condition at the time of mixing using a mixer or the like is not particularly limited, and is, for example, usually -30 to 120°C, preferably -10 to 100°C, more preferably 0 to 80°C, and still more preferably 10 to 60°C. The mixing time is usually 0.1 to 500 hours, and from the viewpoint of making the dispersion state of the raw materials more uniform and promoting the reaction, preferably 1 to 450 hours, more preferably 10 to 425 hours, still more preferably 20 to 400 hours, and even more preferably 40 to 375 hours.

The method of performing mixing accompanied by pulverization using a pulverizer is a method that has been conventionally adopted as a solid phase method (mechanical milling method). As the pulverizer, for example, a media type pulverizer using a pulverization medium can be used.

The media type pulverizer is roughly classified into a container driving-type pulverizer and a media agitating-type pulverizer. Examples of the container driving-type pulverizer include a ball mill and a bead mill equipped with a stirring tank, a pulverization tank, or a combination thereof. Examples of the media agitating-type pulverizer include various pulverizers such as impact type pulverizers such as a cutter mill, a hammer mill, and a pin mill; tower type pulverizers such as a tower mill; stirring tank type pulverizers such as an attritor, an aquamizer, and a sand grinder; circulation tank type pulverizers such as a viscomill and a pearl mill; circulation tube type pulverizers; annular type pulverizers such as CoBall Mill; continuous dynamic type pulverizers; and single- or multi-screw kneaders. Among them, a ball mill and a bead mill exemplified as the container driving-type pulverizer are preferable, and the planetary mill is more preferable, in consideration of easiness of adjustment of the particle diameter of the sulfide to be obtained.

These pulverizers can be appropriately selected according to a desired scale, and in the case of a relatively small scale, a container driving-type pulverizer such as a ball mill or a bead mill can be used, and in the case of a large scale or mass production, a pulverizer of another type may be used.

In addition, as will be described later, in the case of a liquid state accompanied by a liquid such as a solvent at the time of mixing or a slurry state, a wet pulverizer capable of corresponding to wet pulverization is preferable.

Representative examples of the wet pulverizer include a wet bead mill, a wet ball mill, and a wet vibration mill, and a wet bead mill using beads as pulverization media is preferable from the viewpoint that the conditions of the pulverization operation can be freely adjusted and it is easy to correspond to those having a smaller particle diameter. In addition, it is also possible to use a dry pulverizer such as a dry media type pulverizer such as a dry bead mill, a dry ball mill, or a dry vibration mill, or a dry non-media type pulverizer such as a jet mill.

In addition, when the mixing object is in a liquid state or a slurry state, a circulation type pulverizer capable of performing circulation operation for circulating the mixture as necessary can also be used. Specific examples thereof include a pulverizer having a form in which the object is circulated between a pulverizer (pulverizing and mixing machine) for pulverizing the slurry and a temperature holding tank (reaction vessel).

In the case of using a ball mill or a bead mill, the rotation speed varies depending on the scale of the treatment and thus cannot be generally specified, but the rotation speed is usually 10 rpm or more, preferably 20 rpm or more, more preferably 50 rpm or more, and still more preferably 100 rpm or more, and the upper limit thereof is usually 1000 rpm or less, preferably 900 rpm or less, more preferably 800 rpm or less, still more preferably 700 rpm or less, and yet still more preferably 500 rpm or less.

The pulverization time varies depending on the scale of the treatment and thus cannot be generally specified, but is usually 0.5 hours or more, preferably 1 hour or more, more preferably 5 hours or more, still more preferably 10 hours or more, yet still more preferably 20 hours or more, and particularly preferably 25 hours or more, and the upper limit thereof is usually 100 hours or less, preferably 72 hours or less, and more preferably 48 hours or less. When the pulverization time is within the above range, atoms contained in the raw material, particularly oxygen atoms and halogen atoms, are more efficiently and uniformly dispersed, so that a high ionic conductivity is easily obtained.

By selecting the size and material of the medium (beads, balls) to be used, the rotation speed of the rotor, and the time, it is possible to perform a treatment of mixing, stirring, pulverization, or a combination thereof, and it is possible to adjust the particle diameter of the obtained crystalline sulfide solid electrolyte.

(Solvent)

In the mixing, a solvent may be added to and mixed with the raw materials. As the solvent, various solvents widely referred to as organic solvents can be used.

As the solvent, solvents that have been conventionally used in the production of solid electrolytes can be widely adopted, and examples thereof include hydrocarbon solvents such as aliphatic hydrocarbon solvents, alicyclic hydrocarbon solvents, and aromatic hydrocarbon solvents.

Examples of the aliphatic hydrocarbon include hexane, pentane, 2-ethylhexane, heptane, octane, decane, undecane, dodecane, and tridecane; examples of the alicyclic hydrocarbon include cyclohexane and methylcyclohexane; and examples of the aromatic hydrocarbon solvent include benzene, toluene, xylene, mesitylene, ethylbenzene, tert-butylbenzene, trifluoromethylbenzene, and nitrobenzene.

Further, in addition to the aforementioned hydrocarbon solvent, a solvent containing a hetero atom such as an atom other than a carbon atom and a hydrogen atom, for example, a nitrogen atom, an oxygen atom, a sulfur atom, and a halogen atom is also exemplified. Such a solvent has a property of easily forming a complex with a raw material or the like containing a lithium atom, a phosphorus atom, a sulfur atom, an oxygen atom, and a halogen atom used as a raw material (hereinafter, such a solvent is also referred to as a "complexing agent"), and has a property of easily keeping the halogen atom in the structure of the sulfide solid electrolyte, and thus is useful in that a higher ionic conductivity is obtained. Preferred examples of the complexing agent include solvents containing an oxygen atom as a hetero atom, such as an ether solvent, an ester solvent, an alcohol solvent, an aldehyde solvent, and a ketone solvent. In addition, when such a complexing agent is used, it is also possible to allow the reaction of the raw materials to proceed with a mixer or a stirrer without performing the treatment with a pulverizer.

Preferred examples of the ether solvent include aliphatic ethers such as dimethyl ether, diethyl ether, tert-butyl methyl ether, dimethoxymethane, dimethoxyethane, diethylene glycol dimethyl ether (diglyme), triethylene oxide glycol dimethyl ether (triglyme), diethylene glycol, and triethylene glycol; alicyclic ethers such as ethylene oxide, propylene oxide, tetrahydrofuran, tetrahydropyran, dimethoxytetrahydrofuran, cyclopentyl methyl ether, and dioxane; heterocyclic ethers such as furan, benzofuran, and benzopyran; and aromatic ethers such as methyl phenyl ether (anisole), ethyl phenyl ether, dibenzyl ether, and diphenyl ether.

Preferred examples of the ester solvent include methyl formate, ethyl formate, methyl acetate, ethyl acetate, propyl acetate, and isopropyl acetate; aliphatic esters such as methyl propionate, ethyl propionate, dimethyl oxalate, diethyl oxalate, dimethyl malonate, diethyl malonate, dimethyl succinate, and diethyl succinate; alicyclic esters such as methyl cyclohexanecarboxylate, ethyl cyclohexanecarboxylate, and dimethyl cyclohexanedicarboxylate; heterocyclic esters such as methyl pyridinecarboxylate, methyl pyrimidincarboxylate, acetolactone, propiolactone, butyrolactone, and valerolactone; and aromatic esters such as methyl benzoate, ethyl benzoate, dimethyl phthalate, diethyl phthalate, butylbenzyl phthalate, dicyclohexyl phthalate, trimethyl trimellitate, and triethyl trimellitate.

In addition, alcohol solvents such as ethanol and butanol; aldehyde solvents such as formaldehyde, acetaldehyde, and dimethylformamide; and ketone solvents such as acetone and methyl ethyl ketone are preferably exemplified.

Examples of the solvent containing a nitrogen atom as a hetero atom include solvents having a group containing a nitrogen atom, such as an amino group, an amide group, a nitro group, and a nitrile group.

Preferred examples of the solvent having an amino group include aliphatic amines such as ethylenediamine, diaminopropane, dimethylethylenediamine, diethylethylenediamine, dimethyl diaminopropane, tetramethyldiamino methane, tetramethylethylenediamine (TMEDA), and tetramethyldiaminopropane (TMPDA); alicyclic amines such as cyclopropanediamine, cyclohexanediamine, and bisaminomethylcyclohexane; heterocyclic amines such as isophoronediamine, piperazine, dipiperidylpropane, and dimethylpiperazine; and aromatic amines such as phenyldiamine, tolylenediamine, naphthalenediamine, methylphenylenediamine, dimethylnaphthalenediamine, dimethylphenylenediamine, tetramethylphenylenediamine, and tetramethylnaphthalenediamine.

Also preferred are nitrile solvents such as acetonitrile and acrylonitrile; and solvents containing a nitrogen atom such as dimethylformamide, nitrobenzene, and dimethylacetamide.

Preferable examples of the solvent containing a halogen atom as a hetero atom include chloroform, carbon tetrachloride, dichloromethane, chlorobenzene, dichlorobenzene, trifluoromethylbenzene, chlorotoluene, and bromobenzene.

Preferred examples of the solvent containing a sulfur atom include dimethyl sulfoxide and carbon disulfide.

In a case where a solvent is used, the amount of the solvent used is preferably 100 mL or more, more preferably 200 mL or more, still more preferably 250 mL or more, and yet still more preferably 300 mL or more, and the upper limit thereof is preferably 3000 mL or less, more preferably 2500 mL or less, still more preferably 2000 mL or less, and yet still more preferably 1550 mL or less, with respect to 1 kg of the total amount of the raw materials. When the amount of the solvent used is within the above range, the raw materials can be efficiently reacted.

(Drying)

When the mixing is performed using a solvent, the method may include drying a fluid (usually, slurry) obtained by the mixing after the mixing is performed. The sulfide solid electrolyte is obtained by removing the complexing agent from the complex containing the complexing agent when the complexing agent is used as the solvent, by removing the complexing agent from the complex containing the complexing agent and removing the solvent when the complexing agent and the solvent are used in combination, or by removing the solvent when the solvent other than the complexing agent is used.

The fluid obtained by mixing can be dried at a temperature according to the type of the solvent. For example, the drying can be performed at a temperature equal to or higher than the boiling point of the complexing agent.

In addition, the drying can be performed usually at 5°C to 100°C, preferably at 10°C to 85°C, more preferably at 15°C to 70°C, and still more preferably at about room temperature (for example, 23°C) (for example, about room temperature ± 5°C) by drying under reduced pressure (vacuum drying) using a vacuum pump or the like to volatilize the complexing agent and the solvent which is used as necessary.

Drying may be performed by filtering the fluid using a glass filter, solid-liquid separation by decantation, or solid-liquid separation using a centrifugal separator. When a solvent other than the complexing agent is used, a sulfide solid electrolyte is obtained by solid-liquid separation. When a complexing agent is used as the solvent, solid-liquid separation is performed, and then drying is performed under the above temperature conditions to remove the complexing agent taken into the complex.

In the solid-liquid separation, specifically, after a fluid is transferred to a container and a sulfide or a complex in the case of containing a complexing agent (which can also be referred to as a precursor of a sulfide solid electrolyte) is precipitated, decantation for removing the complexing agent and the solvent as a supernatant, or filtration using a glass filter having a pore size of, for example, about 10 to 200 μm, preferably 20 to 150 μm, is easy.

The drying may be performed after the mixing and before the hydrogen treatment described later, or may be performed after the hydrogen treatment.

The sulfide solid electrolyte obtained by performing the aforementioned mixing, or in the case of using a solvent, the sulfide solid electrolyte obtained by removing the solvent by the aforementioned drying expresses ionic conductivity due to lithium atoms.

The sulfide solid electrolyte obtained by performing the aforementioned mixing is basically an amorphous sulfide solid electrolyte (glass component) unless, for example, mixing by pulverization using a pulverizer is performed to such an extent that crystallization occurs.

The sulfide solid electrolyte obtained by performing the aforementioned mixing may be an amorphous sulfide solid electrolyte (glass component) or a crystalline sulfide solid electrolyte, and can be appropriately selected as desired. In the case of producing a crystalline sulfide solid electrolyte, a crystalline sulfide solid electrolyte can be obtained by heating the amorphous sulfide solid electrolyte obtained by the aforementioned mixing.

The sulfide solid electrolyte may also include a crystalline sulfide solid electrolyte in which an amorphous component (glass component) is formed on the surface of a powder of the crystalline sulfide solid electrolyte as a result of, for example, performing a treatment such as pulverization described later in order to adjust the particle diameter of the powder. Therefore, the sulfide solid electrolyte containing an amorphous component includes an amorphous sulfide solid electrolyte and a sulfide solid electrolyte which is a crystalline sulfide solid electrolyte and on the surface of which an amorphous component is formed.

(Heating)

When the crystalline sulfide solid electrolyte of the present embodiment is produced, heating may be further included. In a case where an amorphous sulfide solid electrolyte (glass component) is obtained by the mixing, a crystalline sulfide solid electrolyte is obtained by heating, and in a case where a crystalline sulfide solid electrolyte is obtained by the mixing, a crystalline sulfide solid electrolyte having a further improved crystallinity is obtained by heating. In any case, by heating, the obtained sulfide solid electrolyte can be made into a crystalline sulfide solid electrolyte, and the ionic conductivity can be improved.

In addition, in a case where a complexing agent is used as a solvent at the time of mixing, a complex containing the complexing agent is formed, but the complexing agent is removed from the complex even by heating without performing the aforementioned drying to obtain a sulfide solid electrolyte, and the sulfide solid electrolyte can be amorphous or crystalline depending on the heating conditions.

The heating temperature may be determined according to the structure of the crystalline sulfide solid electrolyte, and specifically, the amorphous sulfide solid electrolyte corresponding to the crystalline sulfide solid electrolyte to be obtained is subjected to differential thermal analysis (DTA) using a differential thermal analyzer (DTA apparatus) under a temperature rising condition of 10°C/minute, and the heating temperature may be set within a range of preferably 5°C or higher, more preferably 10°C or higher, and still more preferably 20°C or higher starting from a peak top temperature of the exothermic peak observed on the lowermost temperature side, and the upper limit thereof is not particularly limited, but may be set to a temperature of about [(peak top temperature of the exothermic peak observed on the lowermost temperature side) + 40°C] or lower. By setting the temperature to such a range, the crystalline sulfide solid electrolyte can be obtained more efficiently and reliably. The heating temperature for obtaining the crystalline sulfide solid electrolyte varies depending on the composition and structure of the crystalline sulfide solid electrolyte to be obtained and cannot be generally defined, but is usually preferably 130°C or higher, more preferably 135°C or higher, and still more preferably 140°C or higher, and the upper limit thereof is not particularly limited, but is preferably 300°C or lower, more preferably 250°C or lower, and still more preferably 200°C or lower.

The heating time is not particularly limited as long as it is a time for obtaining a desired amorphous sulfide solid electrolyte or crystalline sulfide solid electrolyte, but is, for example, preferably 1 minute or more, more preferably 10 minutes or more, still more preferably 30 minutes or more, and yet still more preferably 1 hour or more. The upper limit of the heating time is not particularly limited, and is preferably 24 hours or less, more preferably 10 hours or less, still more preferably 5 hours or less, and yet still more preferably 3 hours or less.

Moreover, heating is preferably performed in an inert gas atmosphere (for example, a nitrogen atmosphere or an argon atmosphere) or a reduced pressure atmosphere (in particular, in a vacuum). For example, an inert gas atmosphere containing a certain concentration of hydrogen may be used. This is because deterioration (for example, oxidation) of the crystalline sulfide solid electrolyte can be prevented.

The method of heating is not particularly limited, and examples thereof include a method using a hot plate, a vacuum heater, an argon gas atmosphere furnace, and a firing furnace. Further, industrially, a horizontal dryer or a horizontal vibrating fluidized dryer having a heating unit and a feed mechanism may be used, and they may be selected depending on the processing amount to be heated.

Examples

Hereinafter, the present invention will be specifically described with reference to Examples, but the present invention is not limited to these Examples.

(Measurement of Ionic Conductivity)

In the present examples, the ionic conductivity was measured as follows.

From each of the crystalline solid electrolytes obtained in Examples and Comparative Examples, a circular pellet having a diameter of 10 mm (cross sectional area S: 0.785 cm$^2$) and a height (L) of 0.1 to 0.3 cm was molded to prepare a specimen. Electrode terminals were connected to the top and the bottom of the specimen, and measured at 25°C by the alternate current impedance method (frequency range: 7 MHz to 0.1 Hz, amplitude: 10 mV) to provide a Cole-Cole plot. In the vicinity of the right end of the arc observed in the high frequency side region, the real part Z' (Ω) at the point where -Z" (Ω) was minimized was referred to as a bulk resistance R (Ω) of the electrolyte, and the ionic conductivity σ (S/cm) was calculated according to the following equations.

$$R = \rho(L/S)$$

$$\sigma = 1/\rho$$

(X-Ray Diffraction Measurement (Measurement of Powder XRD Diffraction))

Powder X-ray diffraction (XRD) measurement was performed as follows.

Each of the powders of the sulfide solid electrolytes obtained in Examples and Comparative Examples was filled in a groove having a diameter of 20 mm and a depth of 0.2 mm, and was leveled with glass to prepare a specimen. The specimen was sealed with a Kapton film for XRD and measured without being exposed to air. The measurement was performed using a powder X-ray diffractometer ("D2 PHASER (model number)", manufactured by BRUKER Japan K.K.) under the following conditions.

Tube voltage: 30 kV
Tube current: 10 mA
X-ray wavelength: Cu-Kα line (1.5418 Å)
Optical system: concentration method
Slit configuration: solar slit 4° (for both incident and receiving sides), divergence slit 1 mm, Kβ filter (Ni plate 0.5%), air scatter screen 3 mm is used.
Detector: semiconductor detector
Measurement range: 2θ = 10 to 60 deg
Step width, scan speed: 0.05 deg, 0.05 deg/sec

From the obtained XRD pattern, a peak appearing at 2θ = 20.3° and a peak appearing at 2θ = 29.6° were specified.

(Thermogravimetric and Differential Thermal Measurement (Measurement of TG-DTA))

Thermogravimetric differential thermal analysis (TG-DTA) was performed using a thermogravimetric differential thermal analysis apparatus (TG-DTA apparatus) ("TGA/DSC 3+ (model number)", manufactured by METTLER TOLEDO). In the measurement, a specimen (about 10 mg or more and 20 mg or less) was packed in an Al pan and heated from 30°C at a temperature rising rate of 10°C/minute under a N$_2$ atmosphere, and for the temperature at which an exothermic peak was observed from the DTA curve, the temperature of the peak top of the exothermic peak on the low temperature side was taken as the Tc1 (°C), and the temperature of the peak top of the exothermic peak on the high temperature side was taken as the Tc2 (°C). The temperature difference between the peak tops of these two exothermic peaks, ΔTc (= Tc2 - Tc1), was calculated.

(Measurement of Solid-State $^{31}$P-NMR)

The measurement was performed with the following apparatus under the following condition.

Apparatus: ECZ400R (manufactured by JEOL Ltd.)
Observed nucleus: $^{31}$P
Observation frequency: 161.994 MHz
Measurement temperature: room temperature
Pulse sequence: single pulse
90° pulse width: 3.2 μs
Wait time until next pulse application after FID Measurement: 60 s
Rotation speed of MAS (magic angle rotation): 11 kHz

Cumulated number: 64
Measurement range: 250 ppm to -150 ppm
Amount of specimen: 100 mg
External standard: $NH_4H_2PO_4$ (chemical shift: 1.00 ppm)

(Peak Separation)

In a case where the peak is to be separated, the resulting solid-state $^{31}$P-NMR spectrum is analyzed with a software "FT-NMR" (a software included in "FT-NMR data processing with personal computers", revised edition (second edition) (manufactured by SANKYO SHUPPAN Co., Ltd.)), so as to determine separated peaks.

The software calculates the separated peaks, the calculated value of NMR signals, and the sum of squared residuals R2 from the NMR signals (experimental values) through the nonlinear least-squares method. Assuming that the maximum peak height is 1, the case where the sum of squared residuals R2 of the experimental value and the calculated value within the analyzed range becomes 0.007 or less, and the number of separated peaks is minimized is assumed to be the completion of peak separation.

Example 1

A raw material inclusion (total: 1.5 g) in which lithium sulfide, diphosphorus pentasulfide, diphosphorus pentoxide, lithium bromide, and lithium iodide were weighed so as to have a molar ratio of 63.75:21.04:0.21:3.75:11.25 was placed in a 45 mL pot made of zirconia of a planetary ball mill (manufactured by Fritsch Japan Co., Ltd.: model number P-7) together with 10 zirconia balls (approximately 32 g) having a diameter of 10 mm under a nitrogen atmosphere, and the pot was completely sealed and the inside of the pot was set to an inert atmosphere (nitrogen atmosphere). Mechanical milling was performed for 40 hours in the planetary ball mill at a rotation speed of 370 rpm without heating and cooling (room temperature). The resulting powdery product (amorphous sulfide solid electrolyte) was subjected to thermogravimetric and differential thermal measurement, and the temperature Tc1 of the peak top of the exothermic peak on the low temperature side was 208°C, the temperature Tc2 of the peak top of the exothermic peak on the high temperature side was 270°C, and ΔTc was 62°C. The resulting product was heated at a temperature Tc1 of 208°C for 2 hours in an inert atmosphere (nitrogen atmosphere) to obtain a crystalline sulfide solid electrolyte.

In the obtained crystalline sulfide solid electrolyte, x, y, and z in the aforementioned composition formula (1) are 0.00625, 15.0000, and 0.0000, respectively, and x × y is 0.09375.

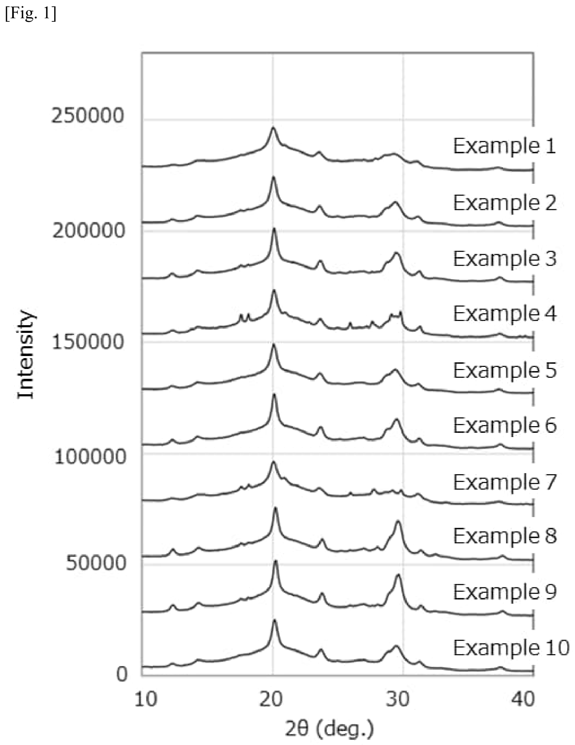

When the ionic conductivity of the obtained crystalline sulfide solid electrolyte was measured, it was 4.9 mS/cm. In addition, as a result of subjecting the obtained crystalline sulfide solid electrolyte to X-ray diffraction measurement using a CuKα line, it was confirmed that the crystalline sulfide solid electrolyte had diffraction peaks at 2θ = 20.3 ± 0.5° and 29.6 ± 0.6°, the peak intensity at 20 = 20.3° was larger than the peak intensity at 29.6°, and the crystalline sulfide solid electrolyte had a thio-LISICON Region II type crystal structure. The X-ray diffraction pattern is shown in Fig. 1.

Examples 2 to 46

Crystalline sulfide solid electrolytes of Examples 2 to 46 were produced in the same manner as in Example 1, except that the types and blending ratios of the raw materials and the pulverization condition (Production Method) in Example 1 were changed to those shown in Tables 1 to 4. In addition, the heating temperature of the product (amorphous sulfide solid electrolyte) in these Examples was set to the temperature Tc1 of each Example.

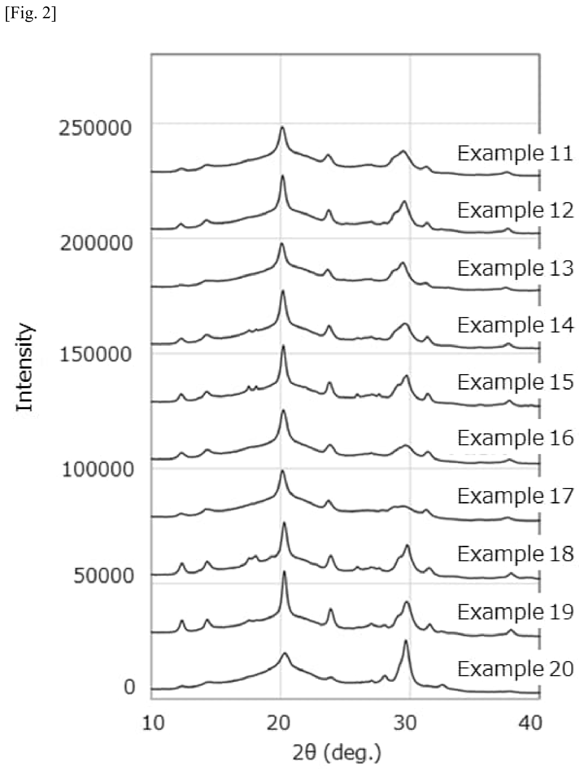

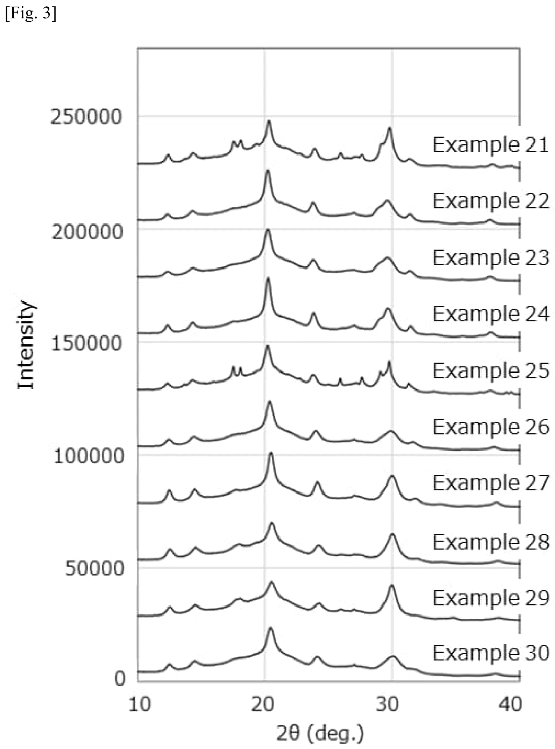

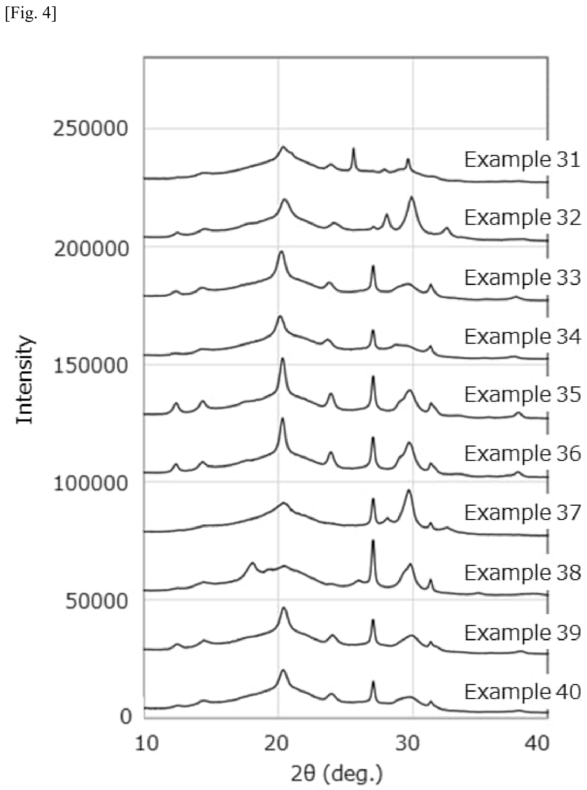

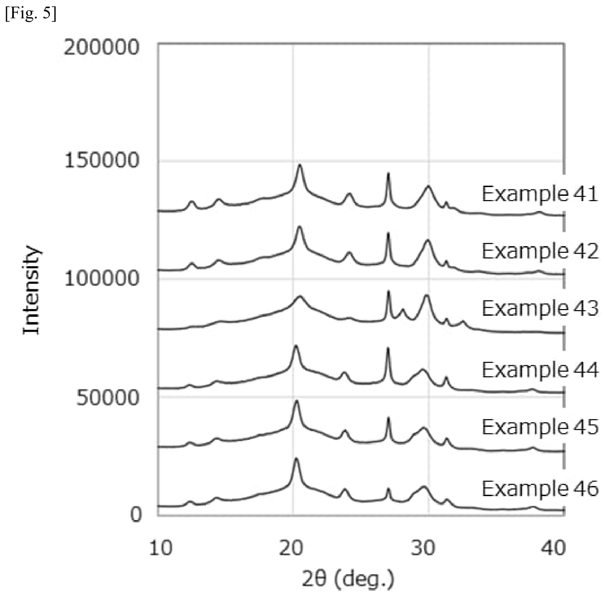

With respect to the crystalline sulfide solid electrolyte obtained in each Example, x, y, and z in the above composition formula (1) are shown in Tables 1 to 4. The obtained crystalline sulfide solid electrolyte was subjected to ionic conductivity measurement, thermogravimetric and differential thermal measurement, and powder XRD diffraction measurement. The results are shown in Tables 1 to 4, and the X-ray diffraction patterns of Examples 2 to 10, Examples 11 to 20, Examples 21 to 30, Examples 31 to 40, and Examples 41 to 46 are shown in Figs. 1 to 5, respectively.

Comparative Examples 1 to 15

Crystalline sulfide solid electrolytes of Comparative Examples were produced in the same manner as in Example 1, except that the types and blending ratios of the raw materials and the pulverization condition (Production Method) in Example 1 were changed to those shown in Tables 5 and 6.

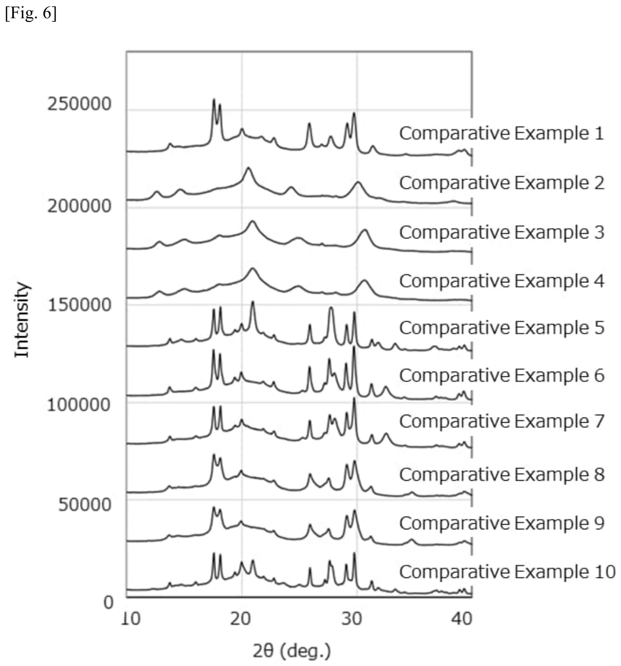

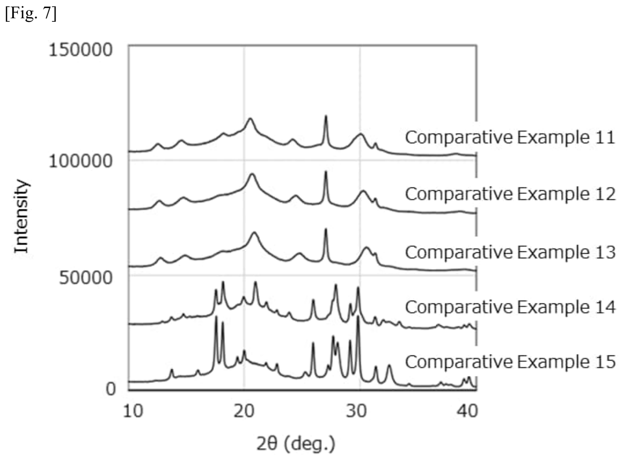

The obtained crystalline sulfide solid electrolyte was subjected to ionic conductivity measurement, thermogravimetric and differential thermal measurement, and powder XRD diffraction measurement. The results are shown in Tables 5 and 6, and the X-ray diffraction patterns of Comparative Examples 1 to 10 are shown in Fig. 6 and the X-ray diffraction patterns of Comparative Examples 11 to 15 are shown in Fig. 7.

[Table 1]

Table 1

| | | Examples | | | | | |
|---|---|---|---|---|---|---|---|
| | | 1 | 2 | 3 | 4 | 5 | 6 |
| $Li_2S$ | mol% | 63.75 | 63.75 | 63.75 | 65.62 | 63.75 | 63.75 |
| $P_2S_5$ | mol% | 21.04 | 21.04 | 21.04 | 21.44 | 20.83 | 20.83 |
| $P_2O_5$ | mol% | 0.21 | 0.21 | 0.21 | 0.44 | 0.43 | 0.43 |
| LiCl | mol% | 0.00 | 0.00 | 0.00 | 0.00 | 0.00 | 0.00 |
| LiBr | mol% | 3.75 | 7.50 | 11.25 | 6.25 | 7.50 | 11.25 |
| LiI | mol% | 11.25 | 7.50 | 3.75 | 6.25 | 7.50 | 3.75 |
| Total | mol% | 100.00 | 100.00 | 100.00 | 100.00 | 100.00 | 100.00 |
| Pulverization condition | | Production method 1 | Production method 1 | Production method 1 | Production method 1 | Production method 1 | Production method 1 |
| Rotation speed | rpm | 370 | 370 | 370 | 370 | 370 | 370 |
| Pulverization time | hr | 40 | 40 | 40 | 40 | 40 | 40 |
| Ionic conductivity | mS/cm | 4.9 | 5.3 | 4.6 | 3.2 | 4.5 | 4.5 |
| Crystal structure | - | R | R | R | R + β | R | R |
| Thermogravimetric and differential thermal measurement | | | | | | | |
| Tc1 | °C | 208 | 209 | 210 | 215 | 209 | 210 |
| Tc2 | °C | 270 | 266 | 269 | 266 | 271 | 275 |
| ΔTc (Tc2 - Tc1) | °C | 62 | 57 | 59 | 51 | 62 | 65 |
| Composition formula | | | | | | | |
| x | - | 0.00625 | 0.00625 | 0.00625 | 0.01250 | 0.01250 | 0.01250 |
| y | - | 15.0000 | 15.0000 | 15.0000 | 12.5000 | 15.0000 | 15.0000 |
| z | - | 0.0000 | 0.0000 | 0.0000 | 0.0000 | 0.0000 | 0.0000 |
| x × y | - | 0.09375 | 0.09375 | 0.09375 | 0.15625 | 0.18750 | 0.18750 |

Table 1 (continued)

| | | Examples | | | | | |
|---|---|---|---|---|---|---|---|
| | | 7 | 8 | 9 | 10 | 11 | 12 |
| $Li_2S$ | mol% | 67.50 | 63.75 | 63.75 | 63.75 | 63.75 | 63.75 |
| $P_2S_5$ | mol% | 21.60 | 20.40 | 20.40 | 20.40 | 20.40 | 20.40 |
| $P_2O_5$ | mol% | 0.90 | 0.85 | 0.85 | 0.85 | 0.85 | 0.85 |
| LiCl | mol% | 0.00 | 0.00 | 0.00 | 0.00 | 0.00 | 0.00 |
| LiBr | mol% | 0.00 | 15.00 | 15.00 | 7.50 | 7.50 | 11.25 |

(continued)

| | | Examples | | | | | |
|---|---|---|---|---|---|---|---|
| | | 7 | 8 | 9 | 10 | 11 | 12 |
| LiI | mol% | 10.00 | 0.00 | 0.00 | 7.50 | 7.50 | 3.75 |
| Total | mol% | 100.00 | 100.00 | 100.00 | 100.00 | 100.00 | 100.00 |
| Pulverization condition | | Production method 1 | Production method 1 | Production method 2 | Production method 1 | Production method 2 | Production method 1 |
| Rotation speed | rpm | 370 | 370 | 220 | 370 | 220 | 370 |
| Pulverization time | hr | 40 | 40 | 40 | 40 | 40 | 40 |
| Ionic conductivity | mS/cm | 2.9 | 3.3 | 3.7 | 4.3 | 4.7 | 3.8 |
| Crystal structure | - | R + β + 4141 | R | R | R | R | R |
| Thermogravimetric and differential thermal measurement | | | | | | | |
| Tc1 | °C | 227 | 216 | 214 | 210 | 209 | 211 |
| Tc2 | °C | 275 | 271 | 267 | 278 | 273 | 282 |
| ΔTc (Tc2 - Tc1) | °C | 48 | 55 | 53 | 68 | 64 | 71 |
| Composition formula | | | | | | | |
| x | - | 0.02500 | 0.02500 | 0.02500 | 0.02500 | 0.02500 | 0.02500 |
| y | - | 10.0000 | 15.0000 | 15.0000 | 15.0000 | 15.0000 | 15.0000 |
| z | - | 0.0000 | 0.0000 | 0.0000 | 0.0000 | 0.0000 | 0.0000 |
| x × y | - | 0.25000 | 0.37500 | 0.37500 | 0.37500 | 0.37500 | 0.37500 |

[Table 2]

Table 2

| | | Examples | | | | | |
|---|---|---|---|---|---|---|---|
| | | 13 | 14 | 15 | 16 | 17 | 18 |
| $Li_2S$ | mol% | 60.00 | 67.50 | 67.50 | 71.25 | 67.50 | 71.25 |
| $P_2S_5$ | mol% | 19.20 | 21.15 | 21.15 | 21.85 | 20.70 | 21.85 |
| $P_2O_5$ | mol% | 0.80 | 1.35 | 1.35 | 1.90 | 1.80 | 1.90 |
| LiCl | mol% | 0.00 | 0.00 | 0.00 | 0.00 | 0.00 | 0.00 |
| LiBr | mol% | 10.00 | 5.00 | 7.50 | 0.00 | 0.00 | 5.00 |
| LiI | mol% | 10.00 | 5.00 | 2.50 | 5.00 | 10.00 | 0.00 |
| Total | mol% | 100.00 | 100.00 | 100.00 | 100.00 | 100.00 | 100.00 |

(continued)

| Pulverization condition | | Production method 1 | Production method 1 | Production method 1 | Production method 1 | Production method 1 | Production method 1 |
|---|---|---|---|---|---|---|---|
| Rotation speed | rpm | 370 | 370 | 370 | 370 | 370 | 370 |
| Pulverization time | hr | 40 | 40 | 40 | 40 | 40 | 40 |
| Ionic conductivity | mS/cm | 4.7 | 3.0 | 2.8 | 2.2 | 2.5 | 1.9 |
| Crystal structure | - | R | R | R + β | R | R | R + β |
| Thermogravimetric and differential thermal measurement | | | | | | | |
| Tc1 | °C | 198 | 224 | 224 | 244 | 228 | 241 |
| Tc2 | °C | 285 | 280 | 264 | 301 | 285 | 277 |
| ΔTc (Tc2 - Tc1) | °C | 87 | 56 | 40 | 57 | 57 | 36 |
| Composition formula | | | | | | | |
| x | - | 0.02500 | 0.03750 | 0.03750 | 0.05000 | 0.05000 | 0.05000 |
| y | - | 20.0000 | 10.0000 | 10.0000 | 5.0000 | 10.0000 | 5.0000 |
| z | - | 0.0000 | 0.0000 | 0.0000 | 0.0000 | 0.0000 | 0.0000 |
| x × y | - | 0.50000 | 0.37500 | 0.37500 | 0.25000 | 0.50000 | 0.25000 |

Table 2(continued)

| | | Examples | | | | | |
|---|---|---|---|---|---|---|---|
| | | 19 | 20 | 21 | 22 | 23 | 24 |
| $Li_2S$ | mol% | 67.50 | 60.00 | 67.50 | 67.50 | 67.50 | 67.50 |
| $P_2S_5$ | mol% | 20.70 | 18.40 | 20.70 | 20.70 | 20.70 | 20.70 |
| $P_2O_5$ | mol% | 1.80 | 1.60 | 1.80 | 1.80 | 1.80 | 1.80 |
| LiCl | mol% | 0.00 | 0.00 | 5.00 | 0.00 | 0.00 | 0.00 |
| LiBr | mol% | 10.00 | 20.00 | 5.00 | 5.00 | 5.00 | 7.50 |
| LiI | mol% | 0.00 | 0.00 | 0.00 | 5.00 | 5.00 | 2.50 |
| Total | mol% | 100.00 | 100.00 | 100.00 | 100.00 | 100.00 | 100.00 |
| Pulverization condition | | Production method 1 | Production method 1 | Production method 1 | Production method 1 | Production method 2 | Production method 1 |
| Rotation speed | rpm | 370 | 370 | 370 | 370 | 220 | 370 |
| Pulverization time | hr | 40 | 40 | 40 | 40 | 40 | 40 |
| Ionic conductivity | mS/cm | 2.3 | 2.0 | 1.5 | 2.7 | 2.9 | 2.5 |
| Crystal structure | - | R | R+L | R + β | R | R | R |

(continued)

| | | | | | | | |
|---|---|---|---|---|---|---|---|
| Thermogravimetric and differential thermal measurement | | | | | | | |
| Tc1 | °C | 226 | 209 | 226 | 225 | 223 | 225 |
| Tc2 | °C | 267 | 283 | 262 | 273 | 289 | 278 |
| ΔTc (Tc2 - Tc1) | °C | 41 | 74 | 36 | 48 | 66 | 53 |
| Composition formula | | | | | | | |
| x | - | 0.05000 | 0.05000 | 0.05000 | 0.05000 | 0.05000 | 0.05000 |
| y | - | 10.0000 | 20.0000 | 10.0000 | 10.0000 | 10.0000 | 10.0000 |
| z | - | 0.0000 | 0.0000 | 0.0000 | 0.0000 | 0.0000 | 0.0000 |
| x × y | - | 0.50000 | 1.00000 | 0.50000 | 0.50000 | 0.50000 | 0.50000 |

[Table 3]

Table 3

| | | Examples | | | | | |
|---|---|---|---|---|---|---|---|
| | | 25 | 26 | 27 | 28 | 29 | 30 |
| $Li_2S$ | mol% | 67.50 | 71.25 | 71.25 | 71.25 | 67.50 | 71.25 |
| $P_2S_5$ | mol% | 20.70 | 19.95 | 19.95 | 19.95 | 18.90 | 19.00 |
| $P_2O_5$ | mol% | 1.80 | 3.80 | 3.80 | 3.80 | 3.60 | 4.75 |
| LiCl | mol% | 5.00 | 0.00 | 0.00 | 5.00 | 10.00 | 0.00 |
| LiBr | mol% | 0.00 | 0.00 | 5.00 | 0.00 | 0.00 | 0.00 |
| LiI | mol% | 5.00 | 5.00 | 0.00 | 0.00 | 0.00 | 5.00 |
| Total | mol% | 100.00 | 100.00 | 100.00 | 100.00 | 100.00 | 100.00 |
| Pulverization condition | | Production method 1 | Production method 1 | Production method 1 | Production method 1 | Production method 1 | Production method 1 |
| Rotation speed | rpm | 370 | 370 | 370 | 370 | 370 | 370 |
| Pulverization time | hr | 40 | 40 | 40 | 40 | 40 | 40 |
| Ionic conductivity | mS/cm | 1.6 | 1.1 | 1.0 | 0.9 | 0.9 | 0.8 |
| Crystal structure | - | R + β | R | R | R+L | R+L | R |
| Thermogravimetric and differential thermal measurement | | | | | | | |
| Tc1 | °C | 223 | 245 | 244 | 242 | 231 | 249 |
| Tc2 | °C | 260 | 320 | 321 | 298 | 301 | 324 |
| ΔTc (Tc2 - Tc1) | °C | 37 | 75 | 77 | 56 | 70 | 75 |

(continued)

| Composition formula | | | | | | | |
|---|---|---|---|---|---|---|---|
| x | - | 0.05000 | 0.10000 | 0.10000 | 0.10000 | 0.10000 | 0.12500 |
| y | - | 10.0000 | 5.0000 | 5.0000 | 5.0000 | 10.0000 | 5.0000 |
| Z | - | 0.0000 | 0.0000 | 0.0000 | 0.0000 | 0.0000 | 0.0000 |
| x × y | - | 0.50000 | 0.50000 | 0.50000 | 0.50000 | 1.00000 | 0.62500 |

Table 3 (continued)

| | | Examples | | | | | |
|---|---|---|---|---|---|---|---|
| | | 31 | 32 | 33 | 34 | 35 | 36 |
| $Li_2S$ | mol% | 60.00 | 60.00 | 76.00 | 72.00 | 76.00 | 72.00 |
| $P_2S_5$ | mol% | 16.00 | 16.00 | 17.48 | 16.56 | 17.48 | 16.56 |
| $P_2O_5$ | mol% | 4.00 | 4.00 | 1.52 | 1.44 | 1.52 | 1.44 |
| LiCl | mol% | 0.00 | 0.00 | 0.00 | 0.00 | 0.00 | 0.00 |
| LiBr | mol% | 0.00 | 20.00 | 0.00 | 0.00 | 5.00 | 10.00 |
| LiI | mol% | 20.00 | 0.00 | 5.00 | 10.00 | 0.00 | 0.00 |
| Total | mol% | 100.00 | 100.00 | 100.00 | 100.00 | 100.00 | 100.00 |
| Pulverization condition | | Production method 1 | Production method 1 | Production method 1 | Production method 1 | Production method 1 | Production method 1 |
| Rotation speed | rpm | 370 | 370 | 370 | 370 | 370 | 370 |
| Pulverization time | hr | 40 | 40 | 40 | 40 | 40 | 40 |
| Ionic conductivity | mS/cm | 1.3 | 1.0 | 2.0 | 2.5 | 2.0 | 2.3 |
| Crystal structure | - | R | R+L | R | R | R | R |
| Thermogravimetric and differential thermal measurement | | | | | | | |
| Tc1 | °C | 205 | 213 | 235 | 217 | 237 | 221 |
| Tc2 | °C | 248 | 310 | 300 | 303 | 301 | 300 |
| ΔTc (Tc2 - Tc1) | °C | 43 | 97 | 65 | 86 | 64 | 79 |
| Composition formula | | | | | | | |
| x | - | 0.12500 | 0.12500 | 0.04444 | 0.04444 | 0.04444 | 0.04444 |
| y | - | 20.0000 | 20.0000 | 6.1728 | 12.1951 | 6.1728 | 12.1951 |
| z | - | 0.0000 | 0.0000 | 0.5000 | 0.5000 | 0.5000 | 0.5000 |
| x × y | - | 2.50000 | 2.50000 | 0.27435 | 0.54201 | 0.27435 | 0.54201 |

[Table 4]

Table 4

| | | Examples | | | | |
|---|---|---|---|---|---|---|
| | | 37 | 38 | 39 | 40 | 41 |
| $Li_2S$ | mol% | 64.00 | 72.00 | 76.00 | 72.00 | 76.00 |
| $P_2S_5$ | mol% | 14.72 | 16.56 | 15.96 | 15.12 | 15.96 |
| $P_2O_5$ | mol% | 1.28 | 1.44 | 3.04 | 2.88 | 3.04 |
| LiCl | mol% | 0.00 | 10.00 | 0.00 | 0.00 | 0.00 |
| LiBr | mol% | 20.00 | 0.00 | 0.00 | 0.00 | 5.00 |
| LiI | mol% | 0.00 | 0.00 | 5.00 | 10.00 | 0.00 |
| Total | mol% | 100.00 | 100.00 | 100.00 | 100.00 | 100.00 |
| Pulverization condition | | Production method 1 | Production method 1 | Production method 1 | Production method 1 | Production method 1 |
| Rotation speed | rpm | 370 | 370 | 370 | 370 | 370 |
| Pulverization time | hr | 40 | 40 | 40 | 40 | 40 |
| Ionic conductivity | mS/cm | 1.8 | 1.0 | 1.0 | 1.3 | 1.0 |
| Crystal structure | - | L | L | R | R | R |
| Thermogravimetric and differential thermal measurement | | | | | | |
| Tc1 | °C | 202 | 222 | 242 | 223 | 239 |
| Tc2 | °C | 271 | 257 | 320 | 280 | 316 |
| ΔTc (Tc2 - Tc1) | °C | 69 | 35 | 78 | 57 | 77 |
| Composition formula | | | | | | |
| x | - | 0.04444 | 0.04444 | 0.08889 | 0.08889 | 0.08889 |
| y | - | 23.8095 | 12.1951 | 6.1728 | 12.1951 | 6.1728 |
| z | - | 0.5000 | 0.5000 | 0.5000 | 0.5000 | 0.5000 |
| x × y | - | 1.05820 | 0.54201 | 0.54870 | 1.08401 | 0.54870 |

Table 4 (continued)

| | | Examples | | | | |
|---|---|---|---|---|---|---|
| | | 42 | 43 | 44 | 45 | 46 |
| $Li_2S$ | mol% | 72.00 | 64.00 | 74.25 | 72.00 | 69.75 |
| $P_2S_5$ | mol% | 15.12 | 13.44 | 14.49 | 16.56 | 18.63 |
| $P_2O_5$ | mol% | 2.88 | 2.56 | 1.26 | 1.44 | 1.62 |
| LiCl | mol% | 0.00 | 0.00 | 0.00 | 0.00 | 0.00 |
| LiBr | mol% | 10.00 | 20.00 | 5.00 | 5.00 | 5.00 |
| LiI | mol% | 0.00 | 0.00 | 5.00 | 5.00 | 5.00 |
| Total | mol% | 100.00 | 100.00 | 100.00 | 100.00 | 100.00 |
| Pulverization condition | | Production method 1 | Production method 1 | Production method 1 | Production method 1 | Production method 1 |
| Rotation speed | rpm | 370 | 370 | 370 | 370 | 370 |
| Pulverization time | hr | 40 | 40 | 40 | 40 | 40 |

(continued)

| Pulverization condition | | Production method 1 | Production method 1 | Production method 1 | Production method 1 | Production method 1 |
|---|---|---|---|---|---|---|
| Ionic conductivity | mS/cm | 1.1 | 1.0 | 2.3 | 2.6 | 2.8 |
| Crystal structure | - | R | L | R | R | R |
| Thermogravimetric and differential thermal measurement | | | | | | |
| Tc1 | °C | 223 | 204 | 216 | 219 | 221 |
| Tc2 | °C | 293 | 252 | 287 | 303 | 284 |
| ΔTc (Tc2 - Tc1) | °C | 70 | 48 | 71 | 84 | 63 |
| Composition formula | | | | | | |
| x | - | 0.08889 | 0.08889 | 0.04118 | 0.04444 | 0.04737 |
| y | - | 12.1951 | 23.8095 | 13.6986 | 12.1951 | 10.9890 |
| z | - | 0.5000 | 0.5000 | 0.8571 | 0.5000 | 0.2222 |
| x × y | - | 1.08401 | 2.11640 | 0.56406 | 0.54201 | 0.52053 |

[Table 5]

Table 5

| | | Comparative Example | | | | | | | |
|---|---|---|---|---|---|---|---|---|---|
| | | 1 | 2 | 3 | 4 | 5 | 6 | 7 | 8 |
| $Li_2S$ | mol% | 75.00 | 75.00 | 75.00 | 75.00 | 67.50 | 63.75 | 60.00 | 63.75 |
| $P_2S_5$ | mol% | 24.00 | 20.00 | 15.00 | 15.00 | 22.50 | 21.25 | 20.00 | 21.25 |
| $P_2O_5$ | mol% | 1.00 | 5.00 | 10.00 | 10.00 | 0.00 | 0.00 | 0.00 | 0.00 |
| LiCl | mol% | 0.00 | 0.00 | 0.00 | 0.00 | 0.00 | 0.00 | 0.00 | 15.00 |
| LiBr | mol% | 0.00 | 0.00 | 0.00 | 0.00 | 0.00 | 15.00 | 20.00 | 0.00 |
| LiI | mol% | 0.00 | 0.00 | 0.00 | 0.00 | 10.00 | 0.00 | 0.00 | 0.00 |
| Total | mol% | 100.00 | 100.00 | 100.00 | 100.00 | 100.00 | 100.00 | 100.00 | 100.00 |
| Pulverization condition | | Production method 1 | Production method 2 | Production method 1 | Production method 2 | Production method 1 | Production method 1 | Production method 1 | Production method 1 |
| Rotation speed | rpm | 370 | 220 | 370 | 220 | 370 | 370 | 370 | 370 |
| Pulverization time | hr | 40 | 40 | 40 | 40 | 40 | 40 | 40 | 40 |
| Ionic conductivity | mS/cm | 0.4 | 0.5 | 0.2 | 0.1 | 0.5 | 0.3 | 0.8 | 0.5 |
| Crystal structure | - | β | R | R | R | β + 4141 | β | β | β |
| Thermogravimetric and differential thermal measurement | | | | | | | | | |
| Tc1 | °C | 240 | 261 | 268 | 268 | 224 | 215 | 209 | 212 |
| Tc2 | °C | N/A | N/A | N/A | N/A | 251 | 250 | 252 | 251 |
| ΔTc (Tc2 - Tc1) | °C | N/A | N/A | N/A | N/A | 27 | 35 | 43 | 39 |
| Composition formula | | | | | | | | | |
| x | - | 0.02500 | 0.12500 | 0.25000 | 0.25000 | 0.00000 | 0.00000 | 0.00000 | 0.00000 |
| y | - | 0.0000 | 0.0000 | 0.0000 | 0.0000 | 10.0000 | 15.0000 | 20.0000 | 15.0000 |
| z | - | 0.0000 | 0.0000 | 0.0000 | 0.0000 | 0.0000 | 0.0000 | 0.0000 | 0.0000 |
| x × y | - | 0.00000 | 0.00000 | 0.00000 | 0.00000 | 0.00000 | 0.00000 | 0.00000 | 0.00000 |

[Table 6]

[Table 6]

EP 4 726 742 A1

Table 6

| | | Comparative Example | | | | | | |
|---|---|---|---|---|---|---|---|---|
| | | 9 | 10 | 11 | 12 | 13 | 14 | 15 |
| Li$_2$S | mol% | 60.00 | 65.63 | 80.00 | 80.00 | 80.00 | 65.25 | 64.20 |
| P$_2$S$_5$ | mol% | 20.00 | 21.88 | 16.80 | 15.20 | 13.60 | 22.77 | 20.54 |
| P$_2$O$_5$ | mol% | 0.00 | 0.00 | 3.20 | 4.80 | 6.40 | 1.98 | 0.86 |
| LiCl | mol% | 20.00 | 0.00 | 0.00 | 0.00 | 0.00 | 0.00 | 0.00 |
| LiBr | mol% | 0.00 | 6.25 | 0.00 | 0.00 | 0.00 | 5.00 | 14.40 |
| LiI | mol% | 0.00 | 6.25 | 0.00 | 0.00 | 0.00 | 5.00 | 0.00 |
| Total | mol% | 100.00 | 100.00 | 100.00 | 100.00 | 100.00 | 100.00 | 100.00 |
| Pulverization condition | | Production method 1 | Production method 1 | Production method 1 | Production method 1 | Production method 1 | Production method 1 | Production method 1 |
| Rotation speed | rpm | 370 | 370 | 370 | 370 | 370 | 370 | 370 |
| Pulverization time | hr | 40 | 40 | 40 | 40 | 40 | 40 | 20 |
| Ionic conductivity | mS/cm | 0.6 | 0.2 | 0.6 | 0.3 | 0.2 | 0.6 | 0.2 |
| Crystal structure | - | β | β + 4141 | R | R | R | β + 4141 | β |
| Thermogravimetric and differential thermal measurement | | | | | | | | |
| Tc1 | °C | 211 | 215 | 262 | 266 | 269 | 231 | 217 |
| Tc2 | °C | 252 | 255 | 370 | 400 | N/A | 252 | 263 |
| ΔTc (Tc2 - Tc1) | °C | 41 | 40 | 108 | 134 | N/A | 21 | 46 |
| Composition formula | | | | | | | | |
| x | - | 0.00000 | 0.00000 | 0.08889 | 0.13333 | 0.17778 | 0.05238 | 0.02501 |
| y | - | 20.0000 | 12.5000 | 0.0000 | 0.0000 | 0.0000 | 9.1743 | 14.4061 |
| z | - | 0.0000 | 0.0000 | 0.5000 | 0.5000 | 0.5000 | -0.1818 | 0.0002 |
| x × y | - | 0.00000 | 0.00000 | 0.00000 | 0.00000 | 0.00000 | 0.48056 | 0.36031 |

31

The crystal structures shown in Tables 1 to 6 are as follows.

R: The main crystal structure has thio-LISICON Region II type crystal structure.

L: The main crystal structure is LGPS type crystal structure.

β: The main crystal structure is $\beta$-$Li_3PS_4$ (crystalline $Li_3PS_4$).

R + L: The crystal structure has both thio-LISICON Region II type crystal structure and LGPS type crystal structure.

R + β: The crystal structure has thio-LISICON Region II type crystal structure and $\beta$-$Li_3PS_4$ (crystalline $Li_3PS_4$).

β + 4141: The crystal structure has $\beta$-$Li_3PS_4$ (crystalline $Li_3PS_4$) and crystalline $Li_4PS_4I$.

R + β + 4141: The crystal structure has thio-LISICON Region II type crystal structure, $\beta$-$Li_3PS_4$ (crystalline $Li_3PS_4$), and crystalline $Li_4PS_4I$.

Production methods 1 and 2 relating to the pulverization conditions shown in Tables 1 to 6 are as follows.

Production method 1: This is the pulverization condition in Example 1. A total amount of the raw material inclusion was set to 1.5 g, was placed in a 45 mL pot made of zirconia together with 10 zirconia balls (approximately 32 g) having a diameter of 10 mm under a nitrogen atmosphere, and the pot was completely sealed and the inside of the pot was set to an inert atmosphere (nitrogen atmosphere), and mechanical milling was performed in a planetary ball mill (model number P-7, manufactured by Fritsch Japan Co., Ltd.) at the rotation speed and time shown in the tables without heating and cooling (room temperature).

Production method 2: The production method was carried out in the same manner as in Production method 1 except that in Production method 2, the total amount of the raw material inclusion was set to 10 g, 600 g of zirconia balls having a diameter of 10 mm were placed in a 500 mL pot made of zirconia, a planetary ball mill (model number P-5, manufactured by Fritsch Japan Co., Ltd.) was used as a pulverizing device, and the rotation speed and time were set as shown in the tables.

From Examples, it was confirmed that the crystalline sulfide solid electrolytes of the present embodiment generally have a higher ionic conductivity than the crystalline sulfide solid electrolytes of Comparative Examples. In addition, from Figs. 1 to 5, it was also confirmed that all of the crystalline sulfide solid electrolytes of the present embodiment have diffraction peaks at 20 = 20.3° and 29.6°, and have at least one crystal structure of a thio-LISICON Region II type crystal structure and an LGPS type crystal structure.

With respect to Comparative Examples, the crystalline sulfide solid electrolytes of Comparative Examples 2 to 4 and 11 to 13 had a thio-LISICON Region II type crystal structure, but did not contain a halogen atom, and therefore, all of the ionic conductivities were small and did not reach the ionic conductivity of the crystalline sulfide solid electrolyte of the Examples. It is considered that the fact that the ionic conductivity of the crystalline sulfide solid electrolytes of Comparative Examples 11 to 13 became small was also affected by the fact that the diffraction peak of lithium sulfide as a raw material was confirmed. The crystalline sulfide solid electrolyte of Comparative Example 1 did not contain a halogen atom and had a crystalline $Li_3PS_4$, so that the ionic conductivity was small.

Further, among the crystalline sulfide solid electrolytes of Comparative Examples 5 to 10 which contained a halogen atom but did not contain an oxygen atom, the crystalline sulfide solid electrolytes of Comparative Examples 5, 6, and 8 to 10 did not reach the ionic conductivity of the crystalline sulfide solid electrolyte of the Examples. The ionic conductivity of the crystalline sulfide solid electrolyte of Comparative Example 7 was about the same as that of the crystalline sulfide solid electrolyte of a part of Examples (Example 30), but the amount of the raw material containing a halogen atom used was large, and it could not be said that the sulfide solid electrolyte of Comparative Example 7 was a sulfide solid electrolyte with reduced raw material cost.

The crystalline sulfide solid electrolyte of Comparative Example 14 had a composition in which z in the aforementioned composition formula (1) was -0.1818 and the deviation of the ratio of lithium atoms to sulfur atoms from the $Li_3PS_4$ structure was large; however, since the deviation of the basic skeleton was large, the crystalline sulfide solid electrolyte did not have either the thio-LISICON Region II type crystal structure or the LGPS type crystal structure, and the ionic conductivity was low. In addition, the crystalline sulfide solid electrolyte of Comparative Example 15 did not have a specific diffraction peak because the pulverization was not sufficiently performed in the production. Therefore, the ionic conductivity was extremely low.

From the above results, it was confirmed that the crystalline sulfide solid electrolyte of the present embodiment contains a lithium atom, a sulfur atom, a phosphorus atom, an oxygen atom, and a halogen atom and has a specific diffraction peak in X-ray diffraction measurement, and a specific composition, whereby a high ionic conductivity can be obtained.

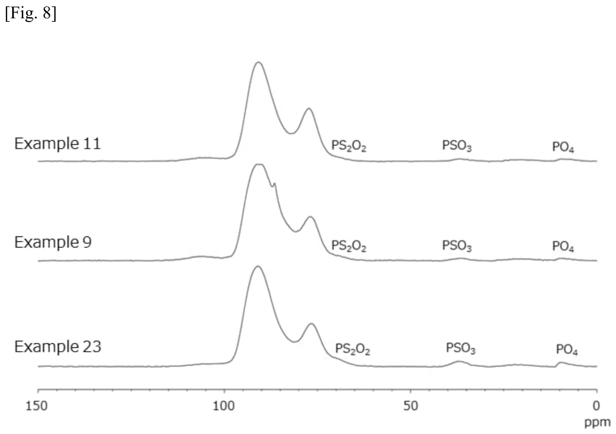

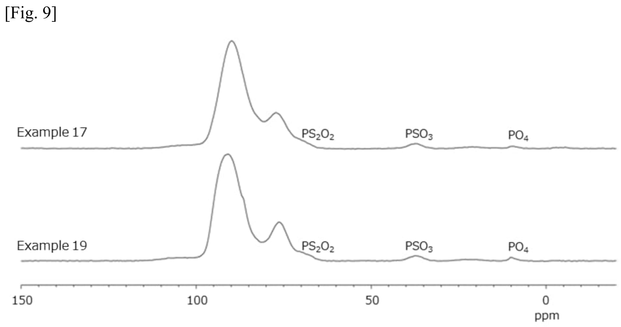

The crystalline sulfide solid electrolytes of Examples 9, 11, 17, 19, and 23 were subjected to solid-state $^{31}$P-NMR measurement. The solid-state $^{31}$P-NMR spectra of the crystalline sulfide solid electrolytes obtained in these Examples are shown in Figs. 8 and 9.

In addition, using the data obtained by the solid-state $^{31}$P-NMR measurement, the ratio (mol%) of phosphorus contained in each structure was calculated based on the peak area attributable to each structure. Specifically, the ratio (mol%) of phosphorus contained in each structure was calculated from the ratio of the area of the peak of each structure to the total area of the peaks attributable to each structure shown in Table 7. The calculated ratio (mol%) of phosphorus in each structure is shown in Table 7.

[Table 7]

Table 7

|  |  | Examples | | | | |
|---|---|---|---|---|---|---|
|  |  | 9 | 11 | 17 | 19 | 23 |
| $PSO_3^{3-}$ | P mol% | 0.80 | 0.90 | 1.70 | 1.80 | 2.00 |
| $PO_4^{3-}$ | P mol% | 0.80 | 0.90 | 0.60 | 0.60 | 1.20 |
| $PS_2O_2^{3-}$ | P mol% | 2.30 | 1.90 | 3.20 | 4.00 | 4.90 |
| R | P mol% | 56.30 | 81.50 | 82.50 | 69.40 | 74.00 |
| $Li_3PS_4$ (crystalline) | P mol% | 16.70 | 1.30 | - | 7.50 | - |
| $Li_3PS_4$ (amorphous) | P mol% | 20.40 | - | - | 13.70 | 15.40 |
| $P_2S_6^{4-}$ | P mol% | 2.70 | 2.60 | 2.80 | 3.00 | 2.50 |
| $P_2S_7^{4-}$ | P mol% | - | - | 0.40 | - | - |
| $Li_4PS_4I$ | P mol% | - | 10.9 | 8.80 | - | - |

In Table 7, "R" indicates a thio-LISICON Region II type crystal structure.

As shown in Table 7, in all of the crystalline sulfide solid electrolytes of Examples 9, 11, 17, 19, and 23, peaks attributable to $PSO_3^{3-}$ were observed, peaks attributable to $PO_4^{3-}$ and $PS_2O_2^{3-}$ were also observed, and it was found that oxygen atoms were taken into the crystal structure. In addition, it was confirmed that the crystalline sulfide solid electrolytes of these Examples had a thio-LISICON Region II type crystal structure despite the fact that the amount of the raw materials containing a halogen atom used was as small as 10.0 to 15.0 mol%, and the ionic conductivities thereof were as high as 3.7, 4.7, 2.5, 2.3, and 2.9 mS/cm, respectively. From this, it was found that a sulfide solid electrolyte having a thio-LISICON Region II type crystal structure expressing a high ionic conductivity even at a low halogen atom content can be obtained by incorporating an oxygen atom into the crystal structure, and a sulfide solid electrolyte having a thio-LISICON Region II type crystal structure expressing a higher ionic conductivity can be obtained when the halogen atom content is relatively high.

Industrial Applicability

Since the crystalline sulfide solid electrolyte of the present embodiment has a high ionic conductivity, realizes a reduction in raw material cost, and has excellent battery performance, it is suitably used in, for example, an electrode mixture in combination with an electrode active material or in a lithium ion battery. Lithium ion batteries are suitably used for batteries used in information-related devices, communication devices, and the like such as personal computers, video cameras, and mobile phones.

**Claims**

1. A crystalline sulfide solid electrolyte comprising a lithium atom, a phosphorus atom, a sulfur atom, an oxygen atom, and a halogen atom,

wherein the crystalline sulfide solid electrolyte has diffraction peaks at $2\theta = 20.3 \pm 0.5°$ and $29.6 \pm 0.6°$ in X-ray diffraction measurement using a CuKα line,
has a peak attributable to $PSO_3^{3-}$ observed at 39.6 ± 5.0 ppm in solid-state $^{31}$P-NMR measurement, and
has a composition represented by the following composition formula (1):

$$(100 - y)(0.5)(Li_{3+2z}P(S_{1-x}O_x)_{4+z}) + (y)LiX \quad (1)$$

in which, x, y, and z satisfy $0.00060 \leq x < 0.15$, $3.0 \leq y < 25.0$, and $-0.17 \leq z \leq 1.5$, respectively, and X represents a halogen atom.

2. The crystalline sulfide solid electrolyte according to claim 1, wherein in the composition formula (1), a product $(x \times y)$ of x and y is 0.0010 or more and 2.7 or less.

3. The crystalline sulfide solid electrolyte according to claim 1 or 2, wherein the crystalline sulfide solid electrolyte has a peak attributable to $PO_4^{3-}$ observed at 9.2 ± 5.0 ppm in solid-state $^{31}$P-NMR measurement.

4. The crystalline sulfide solid electrolyte according to any one of claims 1 to 3, wherein the crystalline sulfide solid electrolyte has a peak attributable to $PS_2O_2^{3-}$ observed at 70.3 ± 5.0 ppm in solid-state $^{31}$P-NMR measurement.

5. The crystalline sulfide solid electrolyte according to any one of claims 1 to 4, wherein in thermogravimetric and differential thermal measurement (measured at a temperature rising rate of 10°C/minute), at least two exothermic peaks of the crystalline sulfide solid electrolyte are measured, and a temperature difference between peak tops of the two exothermic peaks is 20°C or higher and 110°C or lower.

6. The crystalline sulfide solid electrolyte according to any one of claims 1 to 5, wherein the halogen atom is at least one halogen atom selected from a chlorine atom, a bromine atom, and an iodine atom.

7. The crystalline sulfide solid electrolyte according to any one of claims 1 to 6, wherein the halogen atom is a bromine atom and an iodine atom.

8. The crystalline sulfide solid electrolyte according to any one of claims 1 to 7, wherein in the composition formula (1), y satisfies $14.0 < y < 25.0$.

9. The crystalline sulfide solid electrolyte according to any one of claims 1 to 8, having an ionic conductivity of 0.85 mS/cm or more.

10. The crystalline sulfide solid electrolyte according to any one of claims 1 to 9, having an ionic conductivity of 2.5 mS/cm or more.

11. The crystalline sulfide solid electrolyte according to any one of claims 1 to 10, which does not contain at least one metal atom selected from a sodium atom, a boron atom, an aluminum atom, a silicon atom, a germanium atom, an arsenic atom, a selenium atom, an antimony atom, a tellurium atom, a lead atom, and a bismuth atom.

12. The crystalline sulfide solid electrolyte according to any one of claims 1 to 11, wherein the oxygen atom is derived from $P_2O_5$.

13. The crystalline sulfide solid electrolyte according to any one of claims 1 to 12, which is a glass ceramic.

14. A crystalline sulfide solid electrolyte comprising a lithium atom, a phosphorus atom, a sulfur atom, an oxygen atom, and a halogen atom,

wherein the crystalline sulfide solid electrolyte has diffraction peaks at 2θ = 20.3 ± 0.5° and 29.6 ± 0.6° in X-ray diffraction measurement using a CuKα line, and
has a peak attributable to $PSO_3^{3-}$ observed at 39.6 ± 5.0 ppm in solid-state $^{31}$P-NMR measurement.

15. The crystalline sulfide solid electrolyte according to claim 14, wherein the crystalline sulfide solid electrolyte has a peak attributable to $PO_4^{3-}$ observed at 9.2 ± 5.0 ppm in solid-state $^{31}$P-NMR measurement.

16. The crystalline sulfide solid electrolyte according to claim 14 or 15, wherein the crystalline sulfide solid electrolyte has a peak attributable to $PS_2O_2^{3-}$ observed at 70.3 $\pm$ 5.0 ppm in solid-state $^{31}$P-NMR measurement.

[Fig. 1]

[Fig. 2]

[Fig. 3]

[Fig. 4]

[Fig. 5]

[Fig. 6]

[Fig. 7]

[Fig. 8]

[Fig. 9]

Example 17 · PS$_2$O$_2$ · PSO$_3$ · PO$_4$

Example 19 · PS$_2$O$_2$ · PSO$_3$ · PO$_4$

150 · 100 · 50 · 0 · ppm

## INTERNATIONAL SEARCH REPORT

| International application No. |
| --- |
| **PCT/JP2024/019908** |

### A. CLASSIFICATION OF SUBJECT MATTER

*H01B 1/10*(2006.01)i; *C03C 10/16*(2006.01)i; *H01B 1/06*(2006.01)i; *H01B 1/08*(2006.01)i; *H01M 10/0562*(2010.01)i
FI: H01B1/10; C03C10/16; H01B1/06 A; H01B1/08; H01M10/0562

According to International Patent Classification (IPC) or to both national classification and IPC

### B. FIELDS SEARCHED

Minimum documentation searched (classification system followed by classification symbols)

H01B1/10; C03C10/16; H01B1/06; H01B1/08; H01M10/0562

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| A | WO 2021/132173 A1 (IDEMITSU KOSAN CO., LTD.) 01 July 2021 (2021-07-01) paragraphs [0097], [0134]-[0135] | 1-16 |
| A | WO 2019/207956 A1 (TOKYO INSTITUTE OF TECHNOLOGY) 31 October 2019 (2019-10-31) paragraphs [0006], [0059]-[0060], fig. 6 | 1-16 |
| A | JP 2014-93261 A (IDEMITSU KOSAN CO., LTD.) 19 May 2014 (2014-05-19) paragraph [0028] | 1-16 |
| A | JP 2014-93263 A (IDEMITSU KOSAN CO., LTD.) 19 May 2014 (2014-05-19) paragraph [0090] | 1-16 |

☐ Further documents are listed in the continuation of Box C.  ☑ See patent family annex.

| | |
| --- | --- |
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **19 July 2024** | **30 July 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/019908**

| Patent document cited in search report | | | Publication date (day/month/year) | Patent family member(s) | | | Publication date (day/month/year) |
|---|---|---|---|---|---|---|---|
| WO | 2021/132173 | A1 | 01 July 2021 | US | 2023/0021458 | A1 | |
| | | | | paragraphs [0179], [0240]-[0245] | | | |
| | | | | EP | 4084019 | A1 | |
| | | | | CN | 114868210 | A | |
| | | | | JP | 2021-158120 | A | |
| WO | 2019/207956 | A1 | 31 October 2019 | US | 2021/0242491 | A1 | |
| | | | | paragraphs [0006], [0073]-[0075], fig. 6 | | | |
| | | | | EP | 3787091 | A1 | |
| | | | | CN | 112020787 | A | |
| | | | | JP | 2019-192490 | A | |
| JP | 2014-93261 | A | 19 May 2014 | US | 2015/0270571 | A1 | |
| | | | | paragraphs [0071]-[0072] | | | |
| | | | | WO | 2014/073197 | A1 | |
| | | | | EP | 2919313 | A1 | |
| JP | 2014-93263 | A | 19 May 2014 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014093263 A
- JP 2014093261 A
- JP 2014089986 A

**Non-patent literature cited in the description**

- **KANNO et al.** *Journal of The Electrochemical Society*, 2001, vol. 148 (7), A742-746
- *Solid State Ionics*, 2006, vol. 177, 2721-2725